# EUROPÄISCHE PATENTSCHRIFT

(11) **EP 3 302 776 B1**
(45) Veröffentlichungstag und Bekanntmachung des Hinweises auf die Patenterteilung: **23.12.2020**
(21) Anmeldenummer: 16732460.7
(22) Anmeldetag: 03.06.2016
(51) Int. Cl.: B01F 17/00, C09D 5/02, C09D 11/326, C08G 18/76, C08G 18/48, C08G 18/61, C08G 18/80, C08G 18/08, C08G 18/10, C08G 18/28, C08G 18/32, C08G 18/42, C09D 7/65, C09D 11/102

(54) **URETHANGRUPPENHALTIGE REAKTIONSPRODUKTE**
REACTION PRODUCTS CONTAINING URETHANE GROUPS
PRODUITS DE RÉACTION CONTENANT DES GROUPES D'URÉTHANE

(30) Priorität: 03.06.2015 EP 15170613
(43) Veröffentlichungstag der Anmeldung: 11.04.2018
(73) Patentinhaber: BYK-Chemie GmbH, 46483 Wesel (DE)
(72) Erfinder: OKKEL, Andreas, 46483 Wesel (DE); PIESTERT, Frederik, 46483 Wesel (DE); PRITSCHINS, Wolfgang, 46487 Wesel (DE); OMEIS, Jürgen, 46286 Dorsten-Lembeck (DE); BÖMER, Jörg, 46487 Wesel (DE); HEITZER, Jennifer, 47138 Duisburg (DE); HOVERATH, Eva, 46487 Wesel (DE); STELZ, Sabine, 46047 Oberhausen (DE); TIEGS, Werner, 46459 Rees (DE); GÖBELT, Bernd, .. (DE)
(74) Vertreter: Altana IP Department
(86) Internationale Anmeldenummer: PCT/EP2016/062718
(87) Internationale Veröffentlichungsnummer: WO 2016/193473

(56) Entgegenhaltungen:
- EP-A1- 2 333 000
- EP-A1- 2 723 788

## Beschreibung

Die vorliegende Erfindung betrifft urethangruppenhaltige Reaktionsprodukte, ein Verfahren zu deren Herstellung, deren Verwendung als Netzmittel und/oder Dispergiermittel und/oder Dispersionsstabilisatoren und Zusammensetzungen, welche diese enthalten.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/oder neutraler Struktur. Diese Stoffe werden in kleiner Menge entweder direkt auf den Feststoff aufgebracht oder dem Dispergiermedium zugesetzt. Wesentlich ist weiterhin, dass es auch nach vollständiger Deflockulierung der Feststoffagglomerate in Primärteilchen, nach dem Dispergierprozess Reagglomerationen auftreten kann, wodurch der Dispergieraufwand teilweise oder vollständig zunichte gemacht wird. Als Folge von unzulänglicher Dispergierung bzw. von Reagglomeration kommt es typischerweise zu unerwünschten Effekten, wie einem Viskositätsanstieg in flüssigen Systemen, einer Farbtondrift und einem Glanzverlust in Lacken und Beschichtungen sowie einer Verringerung der mechanischen Festigkeit und der Materialhomogenität in Kunststoffen.

Als Netz- und Dispergiermittel kommen in der Praxis verschiedenartige Verbindungstypen in Frage. Dies ist insbesondere darin begründet, dass eine hohe Zahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die WO-A-2012-101180 beschreibt Netz- und Dispergiermittel, die hergestellt werden unter Amidbildung durch Kondensationsreaktion a) eines Polymers enthaltend primären und/oder sekundäre Aminogruppen und b) mindestens einer verzweigten Polyhydroxymonocarbonsäure. Ein Teil der Hydroxylgruppen des Reaktionsprodukts wird anschließend mit mindestens einem organischen Monoisocyanat unter Bildung von Urethanbindungen umgesetzt.

Die EP 2 333 000 A1 beschreibt Polyether modifizierte Epoxid-Amin-Addukte, die ein polymeres Epoxy-Amin-Rückgrat aufweisen, als Netz- und Dispergiermittel. Auch die WO-A-2012/175159 beschreibt die Herstellung von speziellen Additivkompositionen, welche als qualitativ hochwertige Netz- und Dispergiermittel anzusehen sind.

Allerdings ist in diesen zuvor genannten Netz- und Dispergiermitteln für viele Dispergiergieraufgaben, insbesondere aufgrund begrenzter Universalität gegenüber den zu dispergierenden Feststoffen, nicht die optimale und vollständige Lösung zu sehen.

Der vorliegenden Erfindung lag somit die Aufgabe zugrunde, qualitativ hochwertige sowie möglichst universell einsetzbare Produkte bereitzustellen, die als Netz- und/oder Dispergiermittel und/oder Dispersionsstabilisatoren geeignet sind.

Die Aufgabe konnte gelöst werden durch Bereitstellung von urethangruppenhaltigen Reaktionsprodukten, die mindestens 40 Gew.% einer oder mehrere Spezies der allgemeinen Formel (I) enthalten:

(R¹-X)ₚ-Z¹-(XH)_{y} (I),

wobei gilt p + y = w und
w für eine ganze Zahl von 2 bis 10 steht,
p für eine ganze Zahl von 2 bis 10 steht,
y für eine ganze Zahl von 0 bis 8 steht, und
X unabhängig voneinander für O, NH und/oder NZ² steht und XH unabhängig voneinander für eine Hydroxylgruppe OH, eine primäre Aminogruppe NH₂ und/oder eine sekundäre Aminogruppe NHZ² steht, wobei
Z² unabhängig voneinander für einen verzweigten oder unverzweigten, gesättigten oder ungesättigten organischen Rest G(U)ₐ steht, wobei U unabhängig voneinander für eine Hydroxylgruppe, eine primäre Aminogruppe oder eine sekundäre Aminogruppe steht und
a für eine ganze Zahl von 0 bis 8 steht,
wobei gilt w + a ≤ 10, und
G für einen verzweigten oder unverzweigten, gesättigten oder ungesättigten organischen Rest steht,
die p Reste R¹ unabhängig voneinander für einen Rest der allgemeinen Formel (II)

Y-O-CO-NH-R²-NH-CO (II)

stehen,
worin die p Reste Y unabhängig voneinander für einen verzweigten oder unverzweigten, gesättigten oder ungesättigten organischen Rest mit 1 bis 1000 Kohlenstoffatomen stehen, der keine Hydroxylgruppen, keine primären Aminogruppen und keine sekundären Aminogruppen enthält,
die p Reste R² unabhängig voneinander für einen verzweigten oder unverzweigten, gesättigten oder ungesättigten organischen Rest mit 6 bis 20 Kohlenstoffatomen stehen, und
Z¹ ein verzweigter oder unverzweigter, gesättigter oder ungesättigter organischer Rest ist, der mindestens eine tertiäre Stickstoffgruppe enthält und frei von XH-Gruppen ist.

Vorzugsweise enthält das "urethangruppenhaltige Reaktionsprodukt" eine oder mehrere Spezies der allgemeinen Formel (I) als Hauptreaktionsprodukt(e), das heißt die Menge der unter die allgemeine Formel (I) fallenden Spezies des urethangruppenhaltigen Reaktionsprodukts beträgt mindestens 60 Gew.-% und besonders bevorzugt mindestens 90 Gew.-%, bezogen auf das Gesamtgewicht des urethangruppenhaltigen Reaktionsprodukts. Ganz besonders bevorzugt besteht das urethangruppenhaltige Reaktionsprodukt im Wesentlichen aus Spezies der allgemeinen Formel (I). Aufgrund der nur kommerziellen Reinheitsgrade der Reaktanten und/oder möglicherweise auftretender Nebenreaktionen bei der Herstellung der urethangruppenhaltigen Reaktionsprodukte, ist hierin unter "im Wesentlichen bestehend aus" Spezies der allgemeinen Formel (I) ein Gehalt an Spezies der Formel (I) am Gesamtgewicht des urethangruppenhaltigen Reaktionsprodukts von mindestens 95 Gew.-% zu verstehen.

Der Begriff "Spezies" umfasst dabei sowohl Verbindungen mit konkretem Molekulargewicht als auch solche Spezies, die polymere Reste enthalten und somit ein gewichtsmittleres und ein zahlenmittleres Molekulargewicht aufweisen.

Der Begriff "tertiäre Stickstoffgruppe" im Sinne dieser Erfindung beschreibt ein Stickstoffatom, an welches jeweils drei organische Reste über eine N-C- Bindung gebunden sind, wobei die dem Stickstoff direkt benachbarten Kohlenstoffatome jeweils unabhängig voneinander zu einer Carbonylgruppe oder einem Kohlenwasserstoffrest gehören. Bevorzugt sind die an den Stickstoff gebundenen Kohlenstoffatome Bestandteil eines Kohlenwasserstoffrests, d.h. die tertiäre Stickstoffgruppe ist eine tertiäre Aminogruppe.

Bei den "urethangruppenhaltigen Reaktionsprodukten" kann es sich im einfachsten Fall um molekular einheitliche Produkte handeln, wenn ausschließlich molekular einheitliche, chemisch im Wesentlichen reine Verbindungen Y-O-CO-NH-R²-NCO und Z¹-(XH)_{w} zu deren Herstellung eingesetzt werden, in welchen folglich Y nicht polymer ist, alle Y identisch sind, alle R² identisch sind, alle X identisch sind und alle Z¹ identisch sind.

Im einfachsten Fall kann jedoch schon eine molekulare Uneinheitlichkeit der "urethangruppenhaltigen Reaktionsprodukte" erhalten werden für den Fall, dass p + y > 2 und dass die Summe aus p und y größer der Anzahl der Spezies Y-O-CO-NH-R²-NCO ist, auch wenn Y nicht polymer ist, alle Y identisch sind, alle R² identisch sind, alle X identisch sind und alle Z¹ identisch sind. In diesem Fall werden molekulare Verteilungen erhalten, indem die "urethangruppenhaltigen Reaktionsprodukte" unterschiedliche Spezies der allgemeinen Formel (I) mit verschiedenen Werten für p und y Werten aufweisen.

Bei den "urethangruppenhaltigen Reaktionsprodukten" kann es sich jedoch auch um molekular uneinheitliche Produkte handeln. Dies ist beispielsweise dann der Fall wenn der im Rest R¹ enthaltende Rest Y polymerer Natur ist und somit *per se* eine molekulare Uneinheitlichkeit in die Produkte einführt.

Bei den "urethangruppenhaltigen Reaktionsprodukten" kann es sich schließlich auch um Mischungen handeln, wenn die Reaktanten beispielsweise unterschiedliche Reste R¹ und/oder Z¹ enthalten. Die Mischungen können Mischungen chemisch einheitlicher urethangruppenhaltiger Reaktionsprodukte sein, Mischungen von urethangruppenhaltigen Reaktionsprodukten, die polymere Reste enthalten oder Mischungen eines oder mehrerer chemisch einheitlicher urethangruppenhaltiger Reaktionsprodukte mit einem oder mehreren urethangruppenhaltigen Reaktionsprodukten, die polymere Reste enthalten.

Im Sinne dieser Erfindung sind die Begriffe Hydroxylgruppe sowie primäre und sekundäre Aminogruppe im Sinne ihrer allgemeinen Bedeutung zu verstehen. Dies bedeutet insbesondere, dass sie als eigenständige funktionelle Gruppe vorliegen und nicht Teil einer übergeordneten weiteren funktionellen Gruppe sind. So ist im Sinne dieser Erfindung die OH-Funktionalität einer Carbonsäuregruppe keine Hydroxylfunktionalität.

Die Erfindung betrifft auch ein Verfahren zur Herstellung der erfindungsgemäßen urethangruppenhaltigen Reaktionsprodukte beziehungsweise der darin enthaltenen Spezies der allgemeinen Formel (I).

Beim erfindungsgemäßen Verfahren zur Herstellung der erfindungsgemäßen urethangruppenhaltigen Reaktionsprodukte wird
i) mindestens ein Diisocyanat R²(NCO)₂ mit mindestens einem Monoalkohol Y-OH unter Ausbildung eines Urethans der allgemeinen Formel (III)

   Y-O-CO-NH-R²-NCO (III)

   umgesetzt, wobei
   R² und Y wie oben definiert sind, und
ii) p Urethane der allgemeinen Formel (III) werden mit mindestens einer Komponente der Formel (IV)

   (HX)ₚ-Z¹-(HX)_{y} (IV)

   zu einem urethangruppenhaltigen Reaktionsprodukt, enthaltend ein oder mehrere Spezies gemäß der allgemeinen Formel (I)

   (R¹-X)ₚ-Z¹-(XH)_{y} (I),

   umgesetzt, wobei w, y, p, R¹, X und Z¹ wie oben definiert sind.

### Diisocyanat R²(NCO)₂

Im erfindungsgemäßen Verfahren werden zur Herstellung der erfindungsgemäßen urethangruppenhaltigen Reaktionsprodukte Diisocyanate R²(NCO)₂ eingesetzt. Entsprechende Diisocyanate sind aus dem Stand der Technik bekannt. Der zum Diisocyanat R²(NCO)₂ korrespondierende Rest R² ist ein verzweigter oder unverzweigter, gesättigter oder ungesättigter organischer Rest mit 6 bis 20 Kohlenstoffatomen. Der organische Rest R² kann zusätzlich Uretdion- und oder Urethangruppen enthalten, die allerdings unter den gegebenen Bedingungen nicht zur Reaktion kommen. Dies ist insbesondere der Fall, wenn die Reaktionsmischungen keine primären und/oder sekundären Aminogruppen enthalten. Es ist daher bevorzugt, dass für den Fall, dass R² Uretdion- und/oder Urethangruppen enthält, die Gruppe X durch Sauerstoffatome vertreten wird.

Bevorzugt liegt der organische Rest R² in Form eines Kohlenwasserstoffrests vor, besonders bevorzugt als Arylengruppe, als Alkylarylengruppe und/oder als azyklische, zyklische, verzweigte oder unverzweigte Alkylengruppe.

Derartige Diisocyanate sind zum Beispiel 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (H12MDI), Toluylendiisocyanat (TDI), 1-Isocyanato-1-methyl-4(3)isocyanatomethylcyclohexan, Diphenylmethandiisocyanat (MDI), Bis-(isocyanatomethyl)-norbornan und 1,3- und 1,4-Bis-(2-isocyanato-prop-2-yl)-benzol (TMXDI) oder Mischungen solcher Diisocyanate. Die genannten monomeren Diisocyanate können als solche oder in Form ihrer Uretdion- und/oder UrethanGruppen aufweisenden oligomeren oder polymeren Diisocyanatfunktionellen Derivate eingesetzt werden.

Beispiele für als Handelsprodukte erhältliche Diisocyanate sind Desmodur T100 (100%iges 2,4-TDI, Bayer AG), Desmodur T80 (80% 2,4-TDI, 20% 2,6-TDI, Bayer AG), Desmodur T65 (65% 2,4-TDI, 35% 2,6-TDI, Bayer AG), Desmodur N3400 ( Aliphatisches HDI-Uretdion, Bayer AG), Thanecure T9 (Aromatisches TDI-Uretdion, TSE Industries), Crelan VP LS 2147 und Crelan VP LS 2347 (Aliphatische IDPI-Uretdione, Bayer AG). Zur Herstellung der erfindungsgemäßen urethangruppenhaltigen Reaktionsprodukte können ein oder mehrere monomere, oligomere oder polymere Diisocyanate verwendet werden.

Zur Erhöhung der Selektivität bezüglich der Herstellung des in Schritt i) erzeugten unter die allgemeine Formel (III) fallenden Urethans, wird im erfindungsgemäßen Verfahren bevorzugt ein Diisocyanat R²(NCO)₂ eingesetzt, welches zwei unterschiedlich reaktive Isocyanatgruppen aufweist. Besonders bevorzugt wird das Diisocyanat R²(NCO)₂ mit zwei unterschiedlich reaktiven Isocyanatgruppen ausgewählt aus der Gruppe bestehend aus Toluol-2,4-diisocyanat und Isophorondiisocyanat.

Bei der Herstellung des Urethans der allgemeinen Formel (III) in Schritt i) wird das Diisocyanat R²(NCO)₂ mindestens im äquimolaren Verhältnis zum Monoalkohol Y-OH eingesetzt. Vorzugsweise erfolgt der Einsatz des Diisocyanats R²(NCO)₂ in Schritt i) im molaren Überschuss, wodurch eine höhere Selektivität dahingehend erreicht wird, dass vorzugsweise nur genau eine NCO-Gruppe des Diisocyanats in Schritt i) umgesetzt wird.

Je größer der molare Überschuss des Diisocyanats, desto höher ist normalerweise die Selektivität bezüglich der Herstellung des in Schritt i) erzeugten unter die allgemeine Formel (III) fallenden Urethans. Das aufgrund eines Einsatzes im Überschuss verbleibende nicht umgesetzte Diisocyanat wird vorzugsweise wenigstens teilweise (jedoch möglichst vollständig) aus dem Reaktionsgemisch, bevorzugt durch Destillation, entfernt, um letztendlich den Anteil daraus entstehender Nebenprodukte möglichst gering zu halten. Vorzugsweise werden wenigstens 75 Mol-%, bevorzugt wenigstens 90 Mol-%, ganz besonders bevorzugt der gesamte Anteil der nicht umgesetzten Teilmenge des Diisocyanats R²(NCO)₂ aus dem Reaktionsgemisch entfernt. Das Diisocyanat verschlechtert die Qualität des Verfahrensprodukts und ist als umweltschädlich anzusehen.

Bevorzugt wird in Schritt i) das Diisocyanat R²(NCO)₂ zum Monoalkohol Y-OH in einem molaren Verhältnis von mindestens 1,1:1,0, besonders bevorzugt von mindestens 2,0:1,0 und ganz besonders bevorzugt von mindestens 2,5:1,0 eingesetzt.

Es ist ganz besonders bevorzugt, dass in Schritt i) sowohl ein oder mehrere Diisocyanate mit unterschiedlich reaktiven Isocyanatgruppen verwendet werden als auch ein molarer Überschuss der Isocyanatkomponente in Bezug auf den Monoalkohol
Y-OH eingesetzt wird.

Es ist hervorzuheben, dass die mit dem erfindungsgemäßen Verfahren herstellbaren erfindungsgemäßen urethangruppenhaltigen Reaktionsprodukte beziehungsweise die darin enthaltenen Spezies der allgemeinen Formel (I) eine gute Dispergierwirkung bezüglich eines breiten Spektrums von zu dispergierenden Feststoffen zeigen. Dies äußert sich u. a. darin, dass Feststoffe mit sauren, neutralen und basischen Oberflächen jeweils effektiv dispergiert werden können.

Die mit dem erfindungsgemäßen Verfahren herstellbaren urethangruppenhaltigen Reaktionsprodukte beziehungsweise die darin enthaltenen Spezies der allgemeinen Formel (I) sind von besonders hoher Qualität und universell als Netz- und Dispergiermittel einsetzbar. Konkret kann gesagt werden, dass die erfindungsgemäß herstellbaren urethangruppenhaltigen Reaktionsprodukte beziehungsweise die darin enthaltenen Spezies der allgemeinen Formel (I) sowohl in polaren als auch in unpolaren Bindemittelsystemen erfolgreich eingesetzt werden können und dabei als Netz- und Dispergiermittel bzw. als Dispersionsstabilisatoren eine ausgezeichnete Verträglichkeit zeigen. Dies gewährleistet den erfolgreichen Einsatz in Kombination mit den unterschiedlichsten Bindemitteln und Überzugsmaterialien. Weiterhin ermöglichen die mit dem erfindungsgemäßen Verfahren herstellbaren urethangruppenhaltigen Reaktionsprodukte beziehungsweise die darin enthaltenen Spezies der allgemeinen Formel (I) eine flockulationsfreie Mischbarkeit von Pasten, insbesondere Pigmentpasten, bzw. der mit diesen Pasten hergestellten Bindemitteln. Darüber hinaus eignen sich die erfindungsgemäßen urethangruppenhaltigen Reaktionsprodukte beziehungsweise die darin enthaltenen Spezies der allgemeinen Formel (I) als Dispersionsstabilisatoren, insbesondere auch als Emulsionsstabilisatoren. Durch den Einsatz der mit dem erfindungsgemäßen Verfahren herstellbaren urethangruppenhaltigen Reaktionsprodukte beziehungsweise die darin enthaltenen Spezies der allgemeinen Formel (I) wird die Viskosität des eingetragenen Mahlgutes während der Dispergierung deutlich reduziert und ermöglicht auf diese Weise die Herstellung von Formulierungen, welche einen hohen Feststoffanteil aufweisen. Auf diese Weise kann zur besseren Umweltverträglichkeit der Anteil an (flüchtigen) Lösemitteln reduziert werden. Resümierend kann gesagt werden, dass die mit dem erfindungsgemäßen Verfahren herstellbaren urethangruppenhaltigen Reaktionsprodukte beziehungsweise die darin enthaltenen Spezies der allgemeinen Formel (I) bei guter Stabilisierung von Pigmenten oder Füllstoffen die Mahlgutviskosität entsprechender Lacke, Pasten oder Kunststoffformulierungen soweit senken, dass eine Verarbeitung bei hohem Füllgrad möglich ist, ohne dass die Beständigkeit der ausgehärteten Lacke negativ beeinflusst werden. Schließlich ist zu erwähnen, dass das erfindungsgemäße Verfahren verhältnismäßig einfach und wirtschaftlich durchführbar ist, wobei die eingesetzten Ausgangsstoffe allgemein gut verfügbar sind.

### Monohydroxyfunktioneller Alkohol Y-OH

Der im erfindungsgemäßen Verfahren eingesetzte Alkohol Y-OH kann zusätzliche Heteroatome, wie O, S, Si und/oder N, aufweisen, bzw. Ether-, Urethan-, Carbonat-, Amid-, Harnstoff- und/oder Estergruppen enthalten. Die gegenüber Isocyanatgruppen äußerst reaktiven Hydroxylgruppen, primären Aminogruppen und sekundären Aminogruppen dürfen allerdings nicht in Y enthalten sein. Gegebenenfalls ist in den Gruppen Y Wasserstoff gegen Halogen (beispielsweise Fluor und/oder Chlor) substituiert. Der Rest Y kann weitere Gruppen, wie C=C-Doppelbindungen, tragen, die sich bei der Bildung des Additionsproduktes inert verhalten. Die gegebenenfalls vorhandenen Ester, Ether, Urethan, Carbonat und/oder Siloxan-Gruppen können in Blockstruktur vorliegen (beispielsweise Poly(ethylenoxidblock-propylenoxidblock-epsilon-caprolacton), einen Gradienten bilden oder auch statistisch angeordnet sein.

### Y als Etherrest bzw. Polyetherrest:

Als Y-OH können auch Monohydroxypolyether eingesetzt werden. Diese können zum Beispiel durch Alkoxylierung einer monohydroxyfunktionellen Startkomponente T-OH erhalten werden. Prinzipiell kommen alle beschriebenen Komponente Y-OH als Startkomponente T-OH in Frage. Zur Darstellung können beispielsweise Alkanole, Cycloalkanole oder Phenole mit Alkylenoxiden wie Ethylenoxid, Propylenoxid, Butylenoxid, Styroloxid, aliphatischen oder aromatischen Glycidethern wie Isopropylglycidether, Butylglycidether, Allyglycidether, 2-Ethylhexylglycidether, Kresylglycidether und Phenylglycidether umgesetzt werden. Es können auch Mischungen dieser Rohstoffe eingesetzt werden. Im Falle von gemischten Polyethern können diese statistisch, in Gradientenform oder in Blöcken angeordnet sein.

Diese Polyether haben häufig ein zahlenmittleres Molekulargewicht (Mₙ) im Bereich von etwa 100 bis 25000, besonders häufig von 150 bis 15000 und besonders typisch von 200 bis 10000 g/mol.

Bevorzugt sind Polyether auf Basis von Ethylenoxid, Propylenoxid und deren Mischungen.

Beispiele sind hydroxyfunktionelle Vinylverbindungen, wie Hydroxybutylvinylether, monohydroxyfunktionelle Polyoxyalkylenmonoalkohole, wie Allylpolyether (z.B. Polyglykol A 350, Polyglykol A 500, Polyglykol A 1100, Polyglykol A 11-4, Polyglykol A 20-10 oder Polyglykol A 20-20 der Clariant AG oder Pluriol® A 010 R, Pluriol® A 11 RE, Pluriol® A 13 R, Pluriol® A 22 R oder Pluriol® A 23 R der BASF AG), Vinylpolyether (wie Polyglykol V 500, Polyglykol V 1100 oder Polyglykol V 5500 der Clariant AG), Methanol gestartete Polyoxyethylenmonoalkohole (wie Pluriol® A 350 E, Pluriol® A 500 E, Pluriol® A 750 E, Pluriol® A 1020 E, Pluriol® A 2000 E oder Pluriol® A 5010 E der BASF AG), Alkanol gestartete Polyoxypropylenmonoalkohole (wie z.B. Polyglykol B01 / 20, Polyglykol B01 / 40, Polyglykol B01 / 80, Polyglykol B01 / 120 oder Polyglykol B01 / 240 der Clariant AG oder Pluriol® A 1350 P oder Pluriol® A 2000 P der BASF AG) und mit verschiedenen Fettalkoholen gestarteten Polyalkoxylate mit variablem Alkoxylierungsgrad (unter den Handelsnamen Lutensol® A, Lutensol® AT, Lutensol® AO, Lutensol® TO, Lutensol® XP, Lutensol® XL, Lutensol® AP und Lutensol® ON der BASF SE bekannt). Bevorzugt werden Polyoxyalkylenmonoalkohole verwendet, die Ethylenoxid- und/oder Propylenoxid- und/oder Butylenoxidgruppen enthalten und gegebenenfalls mit Styroloxid, Phenylgylcidylether oder Kresylglycidylether modifiziert sind. Besonders bevorzugt ist die Verwendung von Polyoxyalkylenmonoalkoholen (wie Polyglykol B 11/50, Polyglykol B 11/70, Polyglykol B 11/100, Polyglykol B 11/150, Polyglykol B 11/300 oder Polyglykol B 11/700 von der Clariant AG, Pluriol® A 1000 PE, Pluriol® A 1320 PE, oder Pluriol® A 2000 PE der BASF AG oder Terralox WA 110 von DOW Chemicals), bei denen es sich um Butanol gestartete Polyoxyalkylene aus Ethylen- und Propylenoxid mit einer terminalen OH-Gruppe handelt.

In der Regel enthält Y 1 bis 450 Ethersauerstoffatome, welche bevorzugt in Ethersauerstoffatome aufweisenden Gruppen enthalten sind, die sich ableiten von Polytetrahydrofuran, Polyoxetanen und/oder Polyoxiranen.

Bevorzugt enthält Y 3 bis 400 Ethersauerstoffatome, wobei mindestens 50, bevorzugt mindestens 80 Mol-% der Ethersauerstoffatome in Ethylenoxid- und/oder Polypropylenoxid-Struktureinheiten vorliegen.

### Y als Kohlenwasserstoffrest:

Die Kohlenwasserstoffreste liegen bevorzugt als Arylrest, als verzweigter oder unverzweigter Aralkylrest und/oder als acyclischer, cyclischer verzweigter oder unverzweigter Alkylrest vor. Es können auch Gemische solcher Verbindungen, d.h. mindestens zwei verschiedene Verbindungen Y-OH eingesetzt werden. Die aliphatischen oder araliphatischen Verbindungen Y-OH können geradkettig oder verzweigt, gesättigt oder ungesättigt vorliegen. Gesättigte Spezies sind bevorzugt.

Beispiele für Y-OH mit Kohlenwasserstoffresten sind Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol, Cyclohexanol, Fettalkohole, Alkylphenole, Alkylnaphthole, Phenylethanol.

Weiterhin können Y-OH Polyolefinmonoole, wie nichthydrierte, teilhydrierte und/ oder vollständig hydrierte Polybutadiene, nichthydrierte, teilhydrierte und/ oder vollständig hydrierte Polyisoprene, Polyisobutylene, Polypropylene oder Ethylen/Butylen-Copolymere sein. Diese Verbindungen sind bekannt. So wird beispielsweise der Zugang zu hydroxyfunktionellem Polyisobutylenen in US 6875897 beschrieben.

### Y als Esterrest bzw. Polyesterrest:

Als Y-OH können auch Monohydroxymonoester und Monohydroxypolyester eingesetzt werden.

Hydroxyfunktionelle Acrylate oder Methacrylate, wie Hydroxyethylacrylat, Hydroxyethylmethacrylat, Hydroxybutyl(meth)acrylat sind Beispiele für geeignete Monohydroxymonoester.

Polyester können z.B. durch Umsetzung von Dicarbonsäuren sowie deren veresterbaren Derivaten, wie Anhydriden, Säurechloriden oder Dialkylestern (wie Dimethylestern oder Diethylestern) durch Umsetzung mit Diolen und monofunktionellen Startkomponenten, hergestellt werden. Die Bildung von Dihydroxypolyestern kann bei Bedarf durch Einsatz entsprechend stöchiometrischer Mengen an Monohydroxyverbindungen zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie Hydrierungsprodukte. Beispiele für entsprechende Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester für den Einsatz als Y-OH sind solche, die durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Monohydroxy-Startkomponente (wie in US-A-4 647 647 beschrieben) erhalten werden können. Bevorzugt besitzen diese ein zahlenmittleres Molekulargewicht Mₙ von 150 bis 5000 g/mol. Als Startkomponente T-OH sind im Prinzip alle anderen als Y-OH aufgeführten Verbindungen einsetzbar. Es können auch jeweils Gemische der vorgenannten Verbindungen eingesetzt werden. Die Lactonpolymerisation wird nach bekannten Verfahren, initiiert durch beispielsweise Titanate, p-Toluolsulfonsäure oder Dibutylzinndilaurat, bei Temperaturen von etwa 70°C bis 180°C durchgeführt. Besonders bevorzugt sind Polyester auf ε-Caprolacton-Basis, gegebenenfalls in Kombination mit δ-Valerolacton.

### Y als Urethanrest bzw. Polyurethanrest:

Als Y-OH können auch Polyurethane, Polyether- Polyurethane, Polyester-Polyurethane und/oder Polyether-Polyester-Polyurethane eingesetzt werden, die durch Additionsreaktion von Diisocyanaten, mit Dihydroxyverbindungen in Anwesenheit von monofunktionellen Startkomponenten erhalten werden können. Als Hydroxyverbindungen zum Aufbau der urethangruppenhaltigen Verbindungen Y-OH werden bevorzugt Diole mit 2 bis 12 Kohlenstoffatomen, Polyoxyalkylenglykole und dihydroxyfunktionelle Polyester eingesetzt.

### Y als Polycarbonatrest:

Der Rest Y kann auch Carbonatgruppen enthalten, wie diese durch bekannte Umsetzungen mit offenkettigen und/oder cyclischen Carbonaten erhalten werden. Geeignet sind zum Beispiel mit Carbonaten modifizierte lineare Polyester oder Polycarbonatdiole, wie diese in der Polyurethanherstellung verwendet werden. Beispiele sind beschrieben in der US-4 101 529. Geeignete Carbonate sind z.B. aliphatische, cycloaliphatische, araliphatische und/oder aromatische Kohlensäurester, wie Dialkylcarbonate, z.B. Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

### Y als Polyoxazolinrest:

Als Y-OH können auch monohydroxyfunktionelle Poly-2-alkyl-2-oxazoline oder Poly-2-alkyl-2-oxazine fungieren. Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht Mₙ von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

### Y als OH-funktionelles Polymer ethylenisch ungesättigter Verbindungen:

Als Y-OH können auch OH-funktionelle Polymere von ethylenisch ungesättigten Monomeren eingesetzt werden. Die OH-Funktionen können über monohydroxyfunktionelle ethylenisch ungesättigte Monomere, über monohydroxyfunktionelle Initiatoren oder monohydroxfunktionelle Kettenregler in bekannter Weise eingeführt werden zum Beispiel bei der radikalischen Polymerisation. Besonders hohe Selektivitäten in Bezug auf die Monohydroxyfunktionalität lassen sich durch kontrollierte, beziehungsweise lebende Polymerisationsverfahren erzielen wie zum Beipiel ATRP, NMP, RAFT oder anionische Polymerisation. Bevorzugt sind monohydroxyfunktionelle Polyacrylsäureester bzw. Polymethacrylsäureester. Solche Verbindungen sind auf diesem Gebiet der Technik bereits zur Herstellung von anderen Dispergiermitteln verwendet worden, wie sie in der US-A-4 032 698 bzw. in der EP 318 999 beschrieben sind. Beispielsweise sind monohydroxyfunktionelle Polyacrylatmakromere wie Actflow UMM 1001 der Firma Soken Chemical & Engineering Co. erhältlich. Diese Polyacrylate haben meist ein zahlenmittleres Molekulargewicht Mₙ von 300 bis 20000 g/mol, bevorzugt meist von 500 bis 10000 g/mol. Diese können in Blockstruktur oder auch statistisch angeordnet sein oder einen Gradienten bilden.

Beispiele für OH-funktionelle ethylenisch ungesättigte Monomere sind Hydroxyalkyl(meth)acrylate von geradkettigen, verzweigten oder cycloaliphatischen Diolen mit 2 bis 36 C-Atomen, wie 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat; Caprolacton- und/oder Valerolacton-modifizierte Hydroxyalkyl(meth)acrylate (wobei die Hydroxy(meth)acrylate bevorzugt von geradkettigen, verzweigten oder cycloaliphatischen Diolen mit 2 bis 8 C-Atomen abgeleitet sind); OH-funktionelles Poly(ethylenglycol)(meth)acrylat und OH-funktionelles Poly(propylenglycol)(meth)acrylat.

Beispiele für weitere ethylenisch ungesättigte Monomere sind Alkyl(meth)acrylate von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat und t-Butyl(meth)acrylat; Aralkyl(meth)acrylate, wie Benzylmethacrylat und Aryl(meth)acrylate wie Phenylacrylat (wobei die Arylreste jeweils unsubstituiert oder bis zu vierfach substituiert sein können), wie 4-Nitrophenylmethacrylat;
Mono(meth)acrylate von Ethern, Polyethylenglykolen, Polypropylenglycolen oder gemischten Polyethylen/propylenglycolen mit 5 bis 80 C-Atomen, wie Tetrahydrofurfurylmethacrylat, Methoxyethoxyethylmethacrylat, 1-Butoxypropylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat; tertiäre Aminoalkyl(meth)acrylate, wie N,N-Dimethylaminoethyl(meth)acrylat, 2-Trimethylammoniumethylmethacrylatchlorid und N,N-Dimethylaminopropyl(meth)acrylat; (Meth)acrylate von halogenierten Alkoholen, wie Perfluoralkyl(meth)acrylate mit 6 bis 20 C-Atomen; Styrol und substituierte Styrole, wie 4-Methylstyrol, Methacrylnitril und Acrylnitril;
ethylenisch ungesättigte Heterocyclen, wie zum Beispiel 4-Vinylpyridin und 1-[2-(Methacryloyloxy)-ethyl]-2-imidazolidinon;
Vinylester von Carbonsäuren mit 1 bis 20 C-Atomen, wie Vinylacetat; Maleinimid, N-Phenylmaleinimid und N-substituierte Maleinimide mit geradkettigen, verzweigten oder cycloaliphatischen Alkylgruppen mit 1 bis 22 C-Atomen, wie N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 C-Atomen, wie N-(t-Butyl)acrylamid und N,N-Dimethylacrylamid;

Bevorzugte nicht OH-funktionelle Monomere sind Alkyl(meth)acrylate, Aryl(meth)acrylate, Aralkyl(meth)acrylate und Styrol.

### Y als Polysiloxanrest:

Als Y-OH können auch monohydroxyfunktionelle Polysiloxane eingesetzt werden. Die Polysiloxane lassen vorzugsweise sich mit der nachstehenden allgemeinen Formel beschreiben: 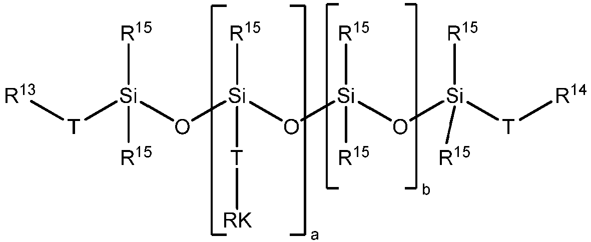 mit
- T =: C₁-C₁₄-Alkylen,
- RK =: unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol,
- R¹³ und R¹⁴: jeweils unabhängig repräsentiert durch C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK,
- R¹⁵ =: C₁-C₁₄-Alkyl, -Aryl oder -Aralkyl,
- a =: 0 - 20, bevorzugt 1 - 15, besonders bevorzugt 1 - 8,
- b =: 2 - 300, bevorzugt 10 - 200, besonders bevorzugt 15 - 100.

Die Polysiloxanreste können auch als organomodifizierte Polysiloxanreste vorliegen.

### Herstellung von Urethanen der allgemeinen Formel (III) aus Y-OH und R²(NCO)₂

Die Urethane der allgemeinen Formel (III) werden im Folgenden, insbesondere in den Beispielen, auch als Monoaddukte **M** bezeichnet.

In dem erfindungsgemäßen Verfahren kann die **Isocyanataddition,** je nach Reaktivität der einzelnen Reaktionspartner, in dem für diese Art von Reaktion üblichen Temperaturbereich von Raumtemperatur bis etwa 150 °C, bevorzugt bis 100°C, besonders bevorzugt bis 70°C erfolgen. Zur Beschleunigung und Reduzierung von Nebenreaktionen können die bekannten und üblichen Katalysatoren, wie tertiäre Amine, Triethylamin, Dimethylcyclohexylamin, N-Methylmorpholin, N,N'-Dimethylpiperazin, 2-(Dimethylaminoethoxy)ethanol, Diazabicyclo-(2,2,2)octan und ähnliche sowie insbesondere organische Metallverbindungen, wie Titansäureester, Eisenverbindungen wie Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Diisocyanat eingesetzt.

### Komponente (HX)ₚ-Z¹-(HX)_{y}

Die als Kopfgruppe bezeichenbare Gruppe Z¹ wird vorzugsweise eingebaut durch Umsetzung einer Komponente der Formel (IV)

(HX)ₚ-Z¹-(HX)_{y} (IV),

mit p, y, X und Z¹ wie für die allgemeine Formel (I) definiert,
mit den Urethanen nach Formel (III). Wobei X gleich oder verschieden ist und durch O, NH oder NZ² repräsentiert wird, XH unabhängig voneinander für eine Hydroxylgruppe OH, eine primäre Aminogruppe NH₂ und/oder eine sekundäre Aminogruppe NHZ² steht und p im Bereich von 2 bis 10 liegt, mit Z² gleich oder verschieden sowie repräsentiert durch einen verzweigten oder unverzweigten, gesättigten oder ungesättigten organischen Rest G(U)ₐ, wobei U unabhängig voneinander für eine Hydroxylgruppe, eine primäre Aminogruppe oder eine sekundäre Aminogruppe steht und a für eine ganze Zahl von 0 bis 8 steht, wobei gilt w + a ≤ 10 mit p + y = w.

Über die Begrenzung der Summe von w + a auf kleiner gleich 10 wird berücksichtigt, dass der bzw. die mögliche/n organische/n Rest/e Z² auch gegenüber Isocyanatgruppen reaktive Gruppen HX aufweisen kann/können. Es ist jedoch erfindungswesentlich, dass eine Spezies der allgemeinen Formel (I) maximal so viele Gruppen HX enthält, dass die Summe aller y + a HX Gruppen und aller p Reste R¹-X eine maximale Anzahl von 10 nicht überschreitet.

Die Gruppe G steht für einen verzweigten oder unverzweigten, gesättigten oder ungesättigten organischen Rest, welcher bevorzugt 1 bis 100 Kohlenstoffatome, bevorzugter 1 bis 60 Kohlenstoffatome, besonders bevorzugt 1 bis 30 und ganz besonders bevorzugt 1 bis 18 Kohlenstoffatome enthält.

Der organische Rest G weist keine gegenüber Isocyanatgruppen reaktive Gruppen HX auf. Der organische Rest G kann jedoch gegebenenfalls auch Heteroatome, insbesondere Sauerstoff und/oder Stickstoffatome, enthalten. Diese liegen bevorzugt in Form von Ethersauerstoffatomen und/oder tertiären Aminogruppen vor.

In einer besonders bevorzugten Ausführungsform der Erfindung ist X gleich oder verschieden und wird repräsentiert durch NH und/oder NZ².

Z¹ wird repräsentiert durch einen verzweigten oder unverzweigten, gesättigten oder ungesättigten organischen Rest, der mindestens eine tertiäre Stickstoffgruppe enthält und frei von XH-Gruppen ist. Bevorzugt enthält der organische Rest Z¹ zwischen 1 und 150 Kohlenstoffatome, bevorzugter zwischen 1 und 80 Kohlenstoffatome, besonders bevorzugt 1 bis 40, ganz besonders bevorzugt 1 bis 20 Kohlenstoffatome.

Bevorzugt liegt die mindestens eine tertiäre Stickstoffgruppe im Rest Z¹ in Form einer tertiären Aminogruppe vor.

Bevorzugte Komponenten (HX)ₚ-Z¹-(HX)_{y} sind Komponenten, die eine Verbindung sind, d.h. ein konkretes Molekulargewicht aufweisen und somit Z¹ nicht polymer ist.

Besonders bevorzugt sind Verbindungen (HX)ₚ-Z¹-(HX)_{y}, die ein konkretes Molekulargewicht im Bereich von 89 g/mol bis 1000 g/mol aufweisen. Weiter bevorzugt ist ein Molekulargewichtsbereich von 89 g/mol bis 700 g/mol, noch weiter bevorzugt ein Molekulargewichtsbereich von 89 g/mol bis 500 g/mol und ganz besonders bevorzugt ein Molekulargewichtsbereich von 89 g/mol bis 300 g/mol.

Weiterhin besonders bevorzugte Verbindungen (HX)ₚ-Z¹-(HX)_{y} sind Aminoalkohole mit mindestens einer tertiären Aminogruppe, die in Summe 2 bis 10 OH-, NH₂ und/oder NHZ²-Gruppen aufweisen sowie Polyamine mit mindestens einer tertiären Aminogruppe und 2 bis 10 primären und/oder sekundären Aminogruppen.

Beispiele für käuflich erhältliche Verbindungen (HX)ₚ-Z¹-(HX)_{y} sind beispielsweise Aminoalkohole mit tertiären Aminogruppen und in Summe 2 bis 10 OH-, NH₂- und/oder NHZ²-Gruppen wie beispielsweise Trialkanolamine wie Triethanolamin, Triisopropanolamin, N-Alkyl-Dialkanolamine wie N-Methyldiethanolamin, N-Butyldiethanolamin, N-Methyldiisopropanolamin, Bis(2-hydroxyethyl)dodecylamin, Bis(2-hydroxyethyl)octadecylamin, N-Alkyl-Aminoalkyl-Hydroxyalkylamine wie Aminopropylmethylethanolamin, N,N-Dialkyl-Dihydroxyalkylamine wie 3-(Diethylamino)propan-1,2-diol, Tetrakis(hydroxyalkyl)alkylendiamine wie Tetrakis(2-hydroxypropyl)ethylenediamin, Dialkylaminoalkyl-Dialkanolamine wie Dimethylaminopropyldipropanolamine, N-(3-dimethylaminopropyl)-N,N-diisopropanolamin, N-Aryl-Dialkanolamine wie N,N-Di(2-hydroxyethyl)anilin, N,N-Dihydroxyethyl-p-toluidin, N,N-Bis(2-hydroxypropyl)-p-toluidin, N-Alkanolpiperazine wie N-(2'-Hydroxyethyl)piperazin und Hexaalkylol-2,4,6-Triamino-1,3,5-triazole wie Hexamethylol-2,4,6-Triamino-1,3,5-triazin und 1,3,5-Tris(2-hydroxyethyl)-1,3,5-triazin-2,4,6-trion.

Ebenfalls geeignet sind Polyamine mit mindestens einer tertiären Aminogruppe und 2 bis 10 primären und/oder sekundären Aminogruppen wie beispielsweise Trisaminoalkylaminen wie Tris(2-Aminoethyl)amin, Tris(2-Aminopropyl)amin, Tris(3-Aminopropyl)amin, N-Alkyl-Diaminoalkylaminen wie N,N-Bis(3-aminopropyl)methylamin, N,N-Dimethyl-Dialkylentriaminen wie N,N-Dimethyldipropylenetriamin, heterocyclische Amine wie 1,4-Bis(3-aminopropyl)piperazin und Polyethyleniminen mit 2 bis 10 primären und/oder sekundären Aminogruppen.

Die nach dem erfindungsgemäßen Verfahren hergestellten - nicht nachbehandelten bzw. aufgereinigten - urethangruppenhaltigen Reaktionsprodukte enthalten typischerweise geringe Mengen Diurethan und Diharnstoff, die aufgrund von Nebenreaktionen entstehen. Mögliche Nebenreaktionen sind die zweifache Reaktion eines Diisocyanats R²(NCO)₂ mit einem Monoalkohol Y-OH unter Ausbildung eines Diurethans der allgemeinen Formel Y-O-CO-NH-R²-NH-CO-O-Y sowie die zweifache Reaktion eines Diisocyanats R²(NCO)₂ mit einer Spezies der allgemeinen Formel (IV) unter Ausbildung einer oder mehrerer Spezies der allgemeinen Formel (HX)_{y+(p-1)}-Z¹-(X-CO-NH-R²-NH-CO-X)-Z¹-(XH)_{y+(p-1)}. Je nach Definition der Gruppe X entstehen in der letzteren Reaktion für X = O Diurethane, für X = NH oder NZ² Diharnstoffe und für den Fall, dass X verschieden durch O und NH/NZ² dargestellt wird Harnstoffurethane. Entsprechend geringe Mengen dieser Nebenprodukte verursachen keinerlei Verschlechterung bezüglich einer Verwendung als Netz- und Dispergiermittel und sind ein deutlicher Hinweis darauf, dass die urethangruppenhaltigen Reaktionsprodukte unter Einsatz von Monohydroxyverbindungen mit dem erfindungsgemäßen Verfahren hergestellt worden sind. Des Weiteren können die erfindungsgemäßen urethangruppenhaltigen Reaktionsprodukte auch noch geringe Menge des nicht umgesetzten Urethans der Formel (III) enthalten. Durch den Einsatz entsprechender Mengen des Amins im zweiten Schritt des erfindungsgemäßen Verfahrens kann der Anteil des Urethans der allgemeinen Formel (III) in der Regel zumindest fast gegen Null reduziert werden, was für die Qualität der erfindungsgemäßen urethangruppenhaltigen Reaktionsprodukte meist vorteilhaft ist. Entsprechende Reaktionen nach Schritt ii) des erfindungsgemäßen Verfahrens gelten vorzugsweise als beendet, wenn ein NCO-Gehalt von < 0,1% ermittelt wird. Die erfindungsgemäßen urethangruppenhaltigen Reaktionsprodukte sind umweltfreundlich, gut lagerfähig und zeigen - entsprechend wie die erfindungsgemäßen Spezies der allgemeinen Formel (I) als solches - ausgezeichnete Eigenschaften als Netz- und Dispergiermittel.

Eine weitere Gruppe von Verbindungen (HX)ₚ-Z¹-(HX)_{y} lässt sich durch Modifikation von Aminoalkoholen, Aminen und Polyaminen, die primäre oder sekundäre Aminogruppen enthalten, mit einer **Modifizierungskomponente MZ,** die Epoxid- und/oder Acrylsäureestergruppen trägt, erhalten.

Durch Epoxidaddition oder Michaeladdition von Acrylestern können primäre Amine in sekundäre und sekundäre Amine in tertiäre umgewandelt werden. Bei der Reaktion einer Epoxidgruppe mit einer primären oder sekundären Aminogruppe entsteht auch immer eine OH-Gruppe. Durch Addition von hydroxyfunktionellen Acrylsäureestern lassen sich ebenfalls zusätzliche OH-Gruppen erhalten. Durch Addition von Di- oder polyfunktionellen Epoxiden oder Acrylaten können Verbindungen mit mehreren funktionellen Gruppen erhalten werden.

Beispielsweise durch Addition von hydroxyfunktionellen Acrylaten wie z.B. Hydroxyethylacrylat oder Epoxiden wie z.B. 2-Ethylhexylglycidylether an Aminoalkohole mit sekundären Aminogruppen wie z.B. N-(2-Hydroxyethyl)anilin lassen sich Verbindungen mit einer tertiären Aminogruppe und zwei Hydroxygruppen erhalten, wie in folgendem Schema 1 beispielhaft dargestellt wird:

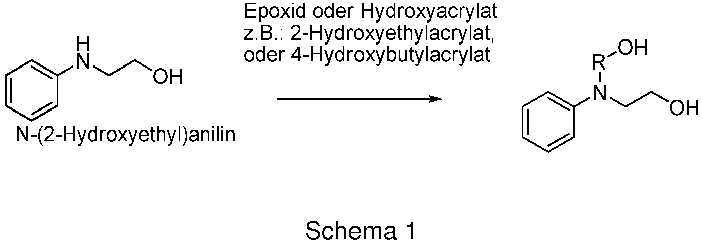

Bei Aminoalkoholen oder anderen Aminen mit primären Aminogruppen können diese durch Umsetzung mit 2 mol der Modifizierungskomponente M in tertiäre Amine umgewandelt werden, wie in folgendem Schema 2 beispielhaft dargestellt wird:

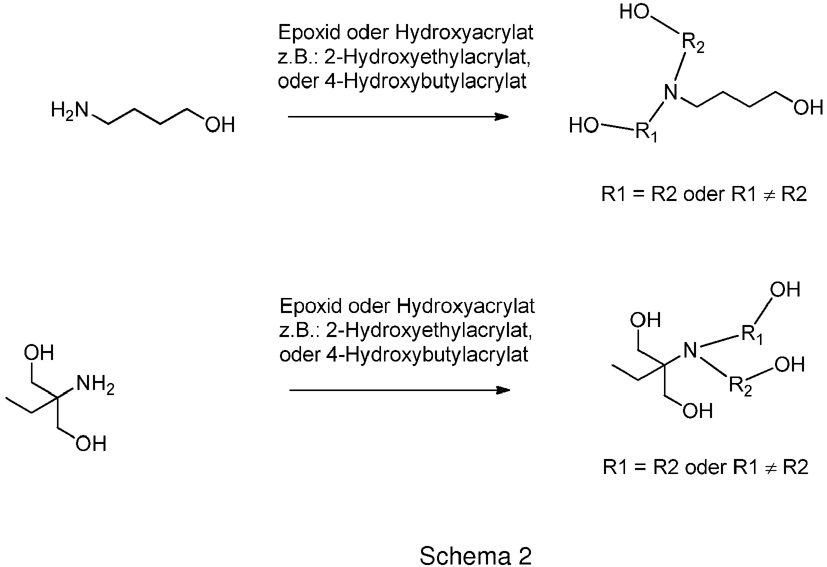

Ein Formelbeispiel für die Addition von polyfunktionellen Epoxiden ist in Schema 3 wiedergegeben:

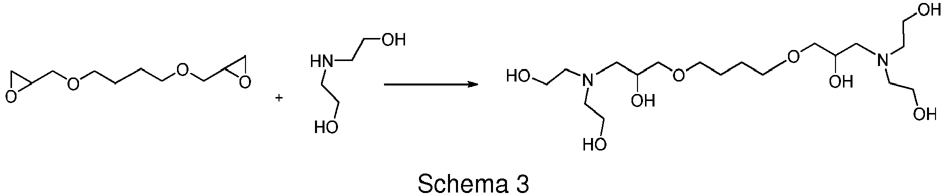

Die vorgenannten Umsetzungen mit Epoxiden oder Hydroxyacrylaten erfolgen zweckmäßig in einem Temperaturbereich von 20 bis 140 °C, bevorzugt bei maximal 120 °C und besonders bevorzugt bei maximal 100 °C.

Bei der Umsetzung mit den Epoxiden entsteht eine sekundäre Hydroxygruppe und am reaktionsbeteiligten Stickstoffatom eine sekundäre oder tertiäre Aminogruppe.

Beispiele für Amine die sich zur Umsetzung mit der Komponente MZ eignen sind beispielsweise aliphatische und araliphatische Amine mit mindestens einer primären oder sekundären Aminogruppe wie Butylamin, Ethylhexylamin, Benzylamin, Oleylamin, Dibutylamin, Xylylendiamin, 1,4.Bis(4-aminophenoxy)benzol; aliphatische und araliphatische Aminalkohole mit mindestens einer primären oder sekundären Aminogruppe wie Ethanolamin, Butanolamin, Diethanolamin, 2-Amino-2-methyl-1-propanol, 2-Amino-1-butanol, 2-Amino-2-methyl-1,3-propanediol, 2-Amino-2-ethyl-1,3-propanediol, 1-Amino-2,3-propanediol, 2-Amino-1,3-propanediol, Tris(hydroxymethyl)aminomethan; und aliphatische und araliphatische Diamine mit einer tertiären Aminogruppe und einer primären oder sekundären Aminogruppe wie 2-(Diethylamino)ethylamin, 3-(Dimethylamino)propylamin, 3-(Diethylamino)propylamin, N,N-Diethyl-1,4-butandiamin, 1-Diethylamino-4-aminopentan, N-(3-Aminopropyl)imidazol, N-(3-Aminopropyl)morpholin, N-(2-Aminoethyl)piperidin, 2-Picolylamin, 1-Methylpiperazin, Aminoethylpiperazin.

Beispiele für als Komponente MZ geeignete polyfunktionelle Acrylate sind: Di-, tri-, tetrafunktionelle Polyester-, Polyether-, Polyether/ester-, Urethan oder Epoxiacrylate, Mono, Di-, Tri- oder Polyalkylenglykoldiacrylate wie z. B. Mono, Di-, Tri- oder Polyethylenglykoldiacrylat, Mono, Di-, Tri- oder Polypropylenglykoldiacrylat, Butandioldiacrylat, 1,6-Hexandioldiacrylat, Trimethylolpropantriacrylat, Neopentylglycolpropylenoxydiacrylat, Tricyclodecandioldiacrylat, Glycerindiacrylat, Glycerintriacrylat, Trimethylolpropantriacrylat, Di(trimethylolpropan)tetraacrylat, Pentaerythrittriacrylat, Dipentaerythritpentaacrylat.

Beispiele für polyfunktionelle Epoxide sind: Mono, Di-, Tri- oder Polyalkylenglykolglykoldiglycidether wie z. B: Mono, Di-, Tri- oder Polyethylenglykoldiglycidether, Propandioldiglycidether, Di-, Tri- oder Polypropylenglykoldiglycidether, 1,4-Butandioldiglycidether, 1,6-Hexandioldiglycidether, Cyclohexandimethanoldiglycidether, Neopentylglykoldiglycidether, Glycerintriglycidether, Di-, Tri- oder Polyglycerintriglycidether, Trimethylolpropantriglycidether, Pentaerythrittetraglycidether, Dipentaerythrittepentaglycidether. Bisphenol-A-basierte Diglycidylether, Epoxyphenol-Novolak, und Epoxycresol-Novolak.

Beispiele für monofunktionelle Acrylate sind Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat, Cyclohexylacrylat und Laurylacrylat; Monoacrylate von kurzkettigen Ethern, wie Tetrahydrofurfurylacrylat, Methoxyethoxyethylacrylat, 1-Butoxypropylacrylat, Cyclohexyloxymethylacrylat, Methoxymethoxyethylacrylat, Benzyloxymethylacrylat, Furfurylacrylat, 2-Butoxyethylacrylat, 2-Ethoxyethylacrylat, Allyloxymethylacrylat, 1-Ethoxybutylacrylat, 1-Ethoxyethylacrylat und Ethoxymethylacrylat.

Geeignete hydroxyfunktionelle Acrylate sind zum Beispiel 2-Hydroxyethylacrylat, 2-Hydroxypropylacrylat, 2-Hydroxybutylacrylat, 2-(2-Hydroxyethoxy)ethylacrylat, 2-Hydroxy-3-[3-(trimethoxysilyl)propoxy]propylacrylat, 2-Hydroxy-3-phenoxypropyl-acrylat, Polyethylenglykol-acrylate wie zum Beispiel die von NOF unter dem Handelsnamen BLEMMER® vertriebenen Typen AE-90, AE-200 und AE-400, Polypropylenglykol-acrylate wie zum Beispiel die von NOF unter dem Handelsnamen BLEMMER® vertriebenen Typen AP-150, AP-400 und AP-550 und Lactonmodifizierte Hydroxyethyl-acrylate wie zum Beispiel die von der DAICEL Corporation unter dem Handelsnamen Placcel vertriebenen FA-Typen.

Geeignete monofunktionelle Epoxide sind zum Beispiel aliphatische, cycloaliphatische und/oder aromatische Glycidylether wie beispielsweise C₁-C₂₀-Alkylglycidylether, Phenylglycidether, Kresylglycidylether, Naphthylglycidylether, Butylglycidether, p-tert.-Butyl-phenylglycidether, 2-Ethyl-Hexylglycidether, C₁₂-C₁₄-Glycidether, Allylglycidylether, 2,3-Epoxypropylneodecanoat (Cardura® E 10, Resolution Performance Products).

### Lösemittel

Das erfindungsgemäße Verfahren kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen.

Die Lösemittel sollten für die Durchführung der oben beschriebenen Reaktionen zweckmäßiger Weise so ausgewählt werden, dass sich diese unter den Reaktionsbedingungen inert gegenüber dem Reaktanten verhalten.

Zweckmäßig wählt man das oder die Lösemittel bzw. Trägermedien bereits unter Berücksichtigung des geplanten Einsatzgebietes aus. Zum Beispiel werden für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen das Verfahrensprodukt zum Beispiel dort eingesetzt werden, wo die Anwesenheit von flüchtigen organischen Verbindungen (VOC) nicht erwünscht ist, so sollte die Formulierung möglichst lösemittelfrei oder in entsprechend als VOC-frei geltenden Trägermaterialien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz (Verbindung der allgemeinen Formel (I)) kann aber auch durch Ausfällen mittels Zusatz von Nichtlösern wie aliphatischen Kohlenwasserstoffen, beispielsweise Hexan, und anschließendem Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacken oder bestimmten Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie SiO₂ oder das PGSS-Verfahren (Particle from Gas Saturated Solutions).

### Modifikationen

In einer weiteren Ausführungsform können die im erfindungsgemäßen urethangruppenhaltigen Reaktionsprodukt noch vorhandenen XH-Gruppen, das heißt OH-Gruppen und/oder primäre und/oder sekundäre Aminogruppen in einer Folgereaktion weiter umgesetzt werden, zum Beispiel mit Carbonsäureanhydriden. Die erfindungsgemäßen urethangruppenhaltigen Reaktionsprodukte dienen dann als Zwischenprodukte bei der Herstellung modifizierter ebenfalls erfindungsgemäßer urethangruppenhaltiger Reaktionsprodukte. Die modifizierten Produkte können auf den gleichen Gebieten eingesetzt werden wie die noch nicht modifizierten erfindungsgemäßen urethangruppenhaltigen Reaktionsprodukte. Durch die Modifizierung kann beispielsweise die Verträglichkeit der Reaktionsprodukte gegenüber bestimmten Medien erhöht werden oder angepasst werden.

Die tertiären Aminogruppen können auch mit Sauerstoff, Peroxoverbindungen wie Percarbonsäuren und mit Wasserstoffperoxid in **Aminoxide** überführt werden, die zusätzlich mit Säuren wie zum Beispiel Salzsäure versalzt werden können.

### Versalzungsprodukte

Die erfindungsgemäßen urethangruppenhaltigen Reaktionsprodukte beziehungsweise die darin enthaltenen Spezies der allgemeinen Formel (I) enthalten tertiäre Aminogruppen. Diese können ganz oder teilweise versalzt werden. Die tertiären Aminogruppen der können beispielsweise mit Säuren, wie Carbonsäuren, Carbonsäurederivaten wie z.B. Carbonsäurehalogeniden oder Phosphorsäuren und deren Estern, zu entsprechenden Ammoniumsalzen umgesetzt werden. Die erfindungsgemäßen urethangruppenhaltigen Reaktionsprodukte dienen dann als Zwischenprodukte bei der Herstellung versalzter ebenfalls erfindungsgemäßer urethangruppenhaltiger Reaktionsprodukte. Die versalzten Produkte können auf den gleichen Gebieten eingesetzt werden wie die nicht versalzten erfindungsgemäßen urethangruppenhaltigen Reaktionsprodukte. Durch die Versalzung kann beispielsweise die Verträglichkeit der Reaktionsprodukte gegenüber bestimmten Medien erhöht werden oder angepasst werden oder die Wechselwirkung mit Feststoffpartikeln wie Pigmenten und/oder Füllstoffen beeinflusst werden.

### Quaternisierungsprodukte

Die erfindungsgemäßen urethangruppenhaltigen Reaktionsprodukte beziehungsweise die darin enthaltenen Spezies der allgemeinen Formel (I) enthalten vorzugsweise tertiären Aminogruppen. Diese können ganz oder teilweise durch Umsetzung mit Quaternisierungsreagenzien in entsprechende **quartäre Ammoniumsalze** überführt werden. Die erfindungsgemäßen urethangruppenhaltigen Reaktionsprodukte dienen dann als Zwischenprodukte bei der Herstellung quaternisierter ebenfalls erfindungsgemäßer urethangruppenhaltiger Reaktionsprodukte. Die quaternisierten Produkte können auf den gleichen Gebieten eingesetzt werden wie die nicht quaternisierten erfindungsgemäßen urethangruppenhaltigen Reaktionsprodukte. Durch die Quaternisierung kann beispielsweise die Verträglichkeit der Reaktionsprodukte gegenüber bestimmten Medien erhöht werden oder angepasst werden oder die Wechselwirkung mit Feststoffpartikeln wie Pigmenten und/oder Füllstoffen beeinflusst werden.

Geeignete Quaternisierungsreagenzien können zum Beispiel gewählt werden aus der Gruppe der Alkylhalogenide und Aralkylhalogenide oder Aralkylverbindungen mit Abgangsgruppen wie Triflat, Methylsulfat oder Tosylat die nukleophile Substitutionsreaktionen mit tertiären Aminen eingehen können oder Oxiranen, wie Alkylenoxiden oder Glycidethern, in Gegenwart von Säuren oder deren Derivaten, wie Carbonsäuren, Sulfonsäuren oder Phosphorsäuren und deren Estern oder Halogeniden.

Beispiele für geeignete Quaternisierungsreagenzien sind Benzylchlorid, 2- oder 4-Vinylbenzylchlorid, Methylchlorid, Methyljodid,.Methyltosylat oder Dimethylsulfat. Bevorzugt sind Benzylchlorid und 4-Vinylbenzylchlorid.

Eine weitere Möglichkeit zur Quaternisierung ist die Verwendung von Glycidylethern in Gegenwart von Säuren. Beispiele für geeignete Gycidylether sind Glycidylmethacrylat, Alkylglycidylether wie 2-Ethylhexylglycidylether und C13/C15-Glycidylether (Handelsname z.B. Grilonit RV 1814) oder Arylglycidylether wie Kresylglycidylether. Für diese Quaternisierungsreaktion geeignete Säuren sind zum Beispiel Carbonsäuren wie Benzoesäure, Essigsäure oder Milchsäure. Weitere Säuren sind saure Phosphorsäureester mit einer oder zwei Estergruppen.

### Erfindungsgemäße Verwendung

Die vorliegende Erfindung betrifft weiterhin die Verwendung der vorstehend beschriebenen erfindungsgemäßen urethangruppenhaltigen Reaktionsprodukte oder der darin enthaltenen Spezies der allgemeinen Formel (I) als Additiv, bevorzugt als Netzmittel und/oder Dispergiermittel und/oder Dispersionsstabilisator in Zusammensetzungen, wie Feststoffgemengen oder Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

Außerdem betrifft die Erfindung auch die oben aufgeführten Zusammensetzungen, wie Feststoffgemengen oder Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten. Die Feststoffgemenge enthalten vorzugsweise Partikel und/oder Fasern, die mit den vorstehend beschriebenen erfindungsgemäßen urethangruppenhaltigen Reaktionsprodukten oder den darin enthaltenen Spezies der allgemeinen Formel (I) behandelt worden sind.

Schließlich betrifft die Erfindung Lacke und Kunststoffe, welche die erfindungsgemäßen urethangruppenhaltigen Reaktionsprodukte oder die darin enthaltenen Spezies der allgemeinen Formel (I) enthalten.

Die erfindungsgemäßen urethangruppenhaltigen Reaktionsprodukte oder die darin enthaltenen Spezies der allgemeinen Formel (I) finden beispielsweise Verwendung als Aluminiumpassivatoren, Dispergiermittel, Dispersionsstabilisatoren oder Netzmittel und lassen sich beispielsweise in pigmentierten und/oder füllstoffhaltigen Produkten, beispielsweise Pigmentkonzentraten oder -pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können die erfindungsgemäßen urethangruppenhaltige Reaktionsprodukte oder die darin enthaltenen Spezies der allgemeinen Formel (I) beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe (auch faserförmige) enthalten.

Auch bei der Herstellung oder Verarbeitung von **Formmassen** auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich diese zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die erfindungsgemäßen urethangruppenhaltigen Reaktionsprodukte oder die darin enthaltenen Spezies der allgemeinen Formel (I) können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen in der Elektronikindustrie, in der Schiffsindustrie, im Rahmen medizinischer Anwendungen, in der Bauindustrie oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die erfindungsgemäßen urethangruppenhaltige Reaktionsprodukte oder die darin enthaltenen Spezies der allgemeinen Formel (I) können vorteilhaft auch bei der Herstellung von **Farbfiltern** für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für **MLCC** (Multi Layer Ceramic Compounds) eingesetzt werden. Die MLCC-Technologie wird bei der Herstellung von Mikrochips und Leiterplatten angewendet.

Die Verwendung **in kosmetischen Präparaten** kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die erfindungsgemäßen urethangruppenhaltige Reaktionsprodukte oder die darin enthaltenen Spezies der allgemeinen Formel (I) können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die erfindungsgemäßen urethangruppenhaltige Reaktionsprodukte oder die darin enthaltenen Spezies der allgemeinen Formel (I) können auch als solche, d.h. ohne zuvor in ein entsprechendes Konzentrat eingearbeitet worden zu sein, in den zuvor genannten Formulierungen und Anwendungsbereichen zum Einsatz kommen.

Typischerweise ist das Produkt, welches die erfindungsgemäßen urethangruppenhaltigen Reaktionsprodukte oder die darin enthaltenen Spezies der allgemeinen Formel (I) sowie Pigment- und/oder Füllstoffe enthält, ein Lack, oder ein Pigmentkonzentrat für Beschichtungszusammensetzungen. Letztlich aber ist der Einsatz der erfindungsgemäßen urethangruppenhaltige Reaktionsprodukte oder der darin enthaltenen Spezies der allgemeinen Formel (I) in beliebigen pigmenthaltigen und/oder füllstoffhaltigen Produkten möglich.

Insbesondere handelt es sich bei den **Pigmentkonzentraten** um Zusammensetzungen, die neben der erfindungsgemäßen urethangruppenhaltigen Reaktionsprodukten oder den darin enthaltenen Spezies der allgemeinen Formel (I), beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben.

Als organische **Lösemittel** kommen insbesondere die typischen im Bereich der Lack- und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als **Pigmente** kommen die dem Fachmann bekannten Pigmente zu Einsatz. Häufig werden Kombinationen verschiedener Pigmente eingesetzt um die gewünschten Eigenschaften zu erhalten. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischte Metalloxide auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt beispielsweise mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Weitere Beispiele sind die folgenden unter ihrer Color Index Nummer (C.I.) aufgeführten Pigmente:
Beispiele für Rotpigmente sind C. I. Pigment Red 1, 2, 3, 4, 5, 6, 7, 8, 9, 12, 14, 15, 16, 17, 21, 22, 23, 31, 32, 37, 38, 41, 47, 48, 48:1, 48:2, 48:3, 48:4, 49, 49:1, 49:2, 50:1, 52:1, 52:2, 53, 53:1, 53:2, 53:3, 57, 57:1, 57:2, 58:4, 60, 63, 63:1, 63:2, 64, 64:1, 68, 69, 81, 81:1, 81:2, 81:3 ,81:4, 83, 88, 90:1, 101, 101:1, 104 ,108, 108:1, 109, 112, 113, 114, 122, 123, 144, 146, 147, 149, 151, 166, 168, 169, 170, 172, 173, 174, 175, 176, 177, 178, 179, 181, 184, 185, 187, 188, 190, 193, 194, 200, 202, 206, 207, 208, 209, 210, 214, 216, 220, 221, 224, 230, 231, 232, 233, 235. 236, 237, 238, 239, 242, 243, 245, 247, 249, 250, 251, 253, 254, 255, 256, 257, 258, 259, 260, 262, 263, 264, 265, 266, 267, 268, 269, 270, 271, 272, 273, 274, 275, und 276.

Beispiele für Blaupigmente sind C. I. Pigment Blue 1, 1:2, 9, 14, 15, 15:1, 15:2, 15:3, 15:4, 15:6, 16, 17, 19, 25, 27, 28, 29, 33, 35, 36, 56, 56:1, 60, 61, 61:1, 62, 63, 66, 67, 68, 71, 72, 73, 74, 75, 76, 78,und 79.

Beispiele für Grünpigmente sind C. I. Pigment Green 1, 2, 4, 7, 8, 10, 13, 14, 15, 17, 18, 19, 26, 36, 45, 48, 50, 51, 54, 55, 58 oder 59.

Beispiele für Gelbpigmente sind C. I. Pigment Yellow 1, 1:1, 2, 3, 4, 5, 6, 9, 10, 12, 13, 14, 16, 17, 24, 31, 32, 34, 35, 35:1, 36, 36:1, 37, 37:1, 40, 41, 42, 43, 48, 53, 55, 61, 62, 62:1, 63, 65, 73, 74, 75, 81, 83, 87, 93, 94, 95, 97, 100, 101, 104, 105, 108, 109, 110, 111, 116, 117, 119, 120, 126, 127, 127:1, 128, 129, 133, 134, 136, 138, 139, 142, 147, 148, 150, 151, 153, 154, 155, 157, 158, 159, 160, 161, 162, 163, 164, 165, 166, 167, 168, 169, 170, 172, 173, 174, 175, 176, 180, 181, 182, 183, 184, 185, 188, 189, 190, 191, 191:1, 192, 193, 194, 195, 196, 197, 198, 199, 200, 202, 203, 204, 205, 206, 207, und 208.

Beispiele für Violettpigmente sind C. I. Pigment Violet 1, 1:1, 2, 2:2, 3, 3:1, 3:3, 5, 5:1, 14, 15, 16, 19, 23, 25, 27, 29, 31, 32, 37, 39, 42, 44, 47, 49, und 50.

Beispiele für Orangepigmente sind C. I. Pigment Orange 1, 2, 5, 13, 16, 17, 19, 20, 21, 22, 23, 24, 34, 36, 38, 39, 43, 46, 48, 49, 61, 62, 64, 65, 67, 68, 69, 70, 71, 72, 73, 74, 75, 77, 78, und 79.

Beispiele für Schwarzpigmente sind C. I. Pigment Black 7, 11, 30, 33.

Enthalten die jeweiligen Produkte, insbesondere die Beschichtungszusammensetzungen, **Füllstoffe,** so handelt es sich zum Beispiel um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid und Mattierungsmittel, wie Kieselsäuren, lassen sich ebenfalls besonders gut durch die erfindungsgemäßen urethangruppenhaltigen Reaktionsprodukte oder die darin enthaltenen Spezies der allgemeinen Formel (I) dispergieren und stabilisieren.

Die erfindungsgemäßen urethangruppenhaltigen Reaktionsprodukte oder die darin enthaltenen Spezies der allgemeinen Formel (I) eignen sich insbesondere auch zur Herstellung von **Feststoffkonzentraten, wie Pigmentkonzentraten.** Dazu werden die erfindungsgemäßen urethangruppenhaltigen Reaktionsprodukte oder die darin enthaltenen Spezies der allgemeinen Formel (I) in einem Trägermedium wie organischen Lösemitteln, Weichmachern und/oder Wasser vorgelegt und die zu dispergierenden Feststoffe werden unter Rühren zugegeben. Zusätzlich können diese Konzentrate Bindemittel und/oder andere Hilfsstoffe enthalten. Mit den erfindungsgemäßen urethangruppenhaltigen Reaktionsprodukten oder den darin enthaltenen Spezies der allgemeinen Formel (I) ist es aber insbesondere möglich, stabile bindemittelfreie Pigmentkonzentrate herzustellen. Ebenso ist es möglich, mit den erfindungsgemäßen urethangruppenhaltigen Reaktionsprodukten oder den darin enthaltenen Spezies der allgemeinen Formel (I) fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäßen urethangruppenhaltigen Reaktionsprodukte oder die darin enthaltenen Spezies der allgemeinen Formel (I) zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen urethangruppenhaltigen Reaktionsprodukte oder den darin enthaltenen Spezies der allgemeinen Formel (I) dispergiert werden und eignen sich dann besonders zur Pigmentierung von thermoplastischen und duroplastischen Kunststoffformulierungen.

### Einsatzmengen

Je nach Einsatzgebiet werden die erfindungsgemäßen urethangruppenhaltigen Reaktionsprodukte oder die darin enthaltenen Spezies der allgemeinen Formel (I) in solchen Mengen eingesetzt, dass in dem letztlich für die weitere Anwendung interessanten Produkt vorzugsweise ein Anteil des erfindungsgemäßen Netz- und Dispergiermittels, der erfindungsgemäßen urethangruppenhaltigen Reaktionsprodukte oder der darin enthaltenen Spezies der allgemeinen Formel (I) von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, werden die erfindungsgemäßen urethangruppenhaltigen Reaktionsprodukte oder die darin enthaltenen Spezies der allgemeinen Formel (I) in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel, den erfindungsgemäßen urethangruppenhaltigen Reaktionsprodukten oder den darin enthaltenen Spezies der allgemeinen Formel (I) durchaus höher sein. Die Menge ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels bzw. der erfindungsgemäßen urethangruppenhaltigen Reaktionsprodukte oder der darin enthaltenen Spezies der allgemeinen Formel (I) sind für anorganische Pigmente beispielsweise 1 bis 20 Gew.-% und für organische Pigmente 10 bis 50 Gew.-%, jeweils bezogen auf den zu dispergierenden Feststoff, insbesondere das Pigment. Bei sehr feinteiligen Pigmenten (beispielsweise einigen Rußen) können auch Zugabemengen von 30 bis 90% oder sinnvoll sein. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als **Einzelanreibung** erfolgen oder auch als **Gemischanreibung** mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen urethangruppenhaltigen Reaktionsprodukte oder der darin enthaltenen Spezies der allgemeinen Formel (I) häufig eine gleichnamige, in der Regel positive, Ladung aller Teilchen erreichen und damit Instabilitäten durch Ladungsunterschiede vermeiden. Ihre optimale Wirkung erzielen die Dispergiermittel bzw. die erfindungsgemäßen urethangruppenhaltigen Reaktionsprodukte oder die darin enthaltenen Spezies der allgemeinen Formel (I) bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen urethangruppenhaltigen Reaktionsprodukte oder die darin enthaltenen Spezies der allgemeinen Formel (I) auch nachträglich eingesetzt werden (als sogenannte "Post-Additive"), zum Beispiel, um in einem fertig aufgelackten Ansatz Ausschwimm- oder Flockulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen urethangruppenhaltigen Reaktionsprodukte oder die darin enthaltenen Spezies der allgemeinen Formel (I) letztlich ihre Wirkungen entfalten sollen, können zudem ein organisches Polymer als weitere **Bindemittel** enthalten. Solche Bindemittel sind dem Fachmann bekannt. Dieses mindestens eine weitere Bindemittel kann beispielsweise über ein Auflacksystem eingeführt werden, welches beispielsweise mit einem Pigmentkonzentrat, enthaltend die erfindungsgemäßen urethangruppenhaltigen Reaktionsprodukte oder die darin enthaltenen Spezies der allgemeinen Formel (I), gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.
Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktssysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können **wasserbasierend oder lösemittelbasierend** sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung vorzugsweise nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält.

Als **weitere Produktkomponenten** kommen beispielsweise in Frage Photoinitiatoren, Entschäumer, Netzmittel, filmbildende Hilfsmittel, wie CelluloseDerivate (beispielsweise Cellulosenitrate, Celluloseacetate, Celluloseacetobutyrat), Reaktivverdünner, Verlaufmittel, Dispergiermittel, und/oder rheologiesteuernde Additive.

Die **Herstellung der als Produkte bevorzugten Pigmentkonzentrate** und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkesseln oder Dissolvern.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die **Applikation** erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10 °C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der vorstehend beschriebenen Anwendung als Dispergiermittel und/oder Beschichtungsmittel für pulver- und faserförmige Feststoffe können die erfindungsgemäßen urethangruppenhaltigen Reaktionsprodukte oder die darin enthaltenen Spezies der allgemeinen Formel (I) auch als **Viskositätsreduzierer und Kompatibilisatoren in Kunstharzen** eingesetzt werden. Beispiele für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PS-gefüllten SMC- oder BMC-Mischungen können die erfindungsgemäßen urethangruppenhaltigen Reaktionsprodukte oder die darin enthaltenen Spezies der allgemeinen Formel (I) aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der erfindungsgemäßen urethangruppenhaltigen Reaktionsprodukte oder die darin enthaltenen Spezies der allgemeinen Formel (I) können z.B. in unverträglichen Polyol-Mischungen, Polyol-Isocyanat-Mischungen oder Polyol-Treibmittelmischungen (werden z.B. bei der Polyurethan-Herstellung eingesetzt) **Phasenvermittlungseffekte** erzielt werden.

Im Folgenden wird die vorliegende Erfindung durch nachstehende Beispiele zusätzlich erläutert.

### BEISPIELE

Bei molekular uneinheitlichen Substanzen stellen die angegebenen Molekulargewichte Durchschnittswerte des Zahlenmittels dar. Die Molekulargewichte beziehungsweise zahlenmittleren Molekulargewichte Mₙ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

### Festkörper

Die Probe (2,0 ± 0,1 g Prüfsubstanz) wird in eine vorher getrocknete Aluminiumschale eingewogen und 10 Minuten bei 150 °C im Trockenschrank getrocknet, im Exsikkator abgekühlt, und dann zurückgewogen. Der Rückstand entspricht dem Festkörperanteil.

### NCO-Zahl

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### OH-Zahl

Die Bestimmung der OH-Zahl erfolgt nach DIN ISO 4629 durch Acetylierung mit einem Überschuss Essigsäureanhydrid. Anschließend wird das überschüssige Essigsäureanhydrid durch Wasserzugabe zu Essigsäure aufgespalten und mit ethanolischer KOH-Lösung zurücktitriert. Die OH-Zahl gibt die Menge KOH in mg an, die der bei der Acetylierung von 1g Substanz gebundenen Menge Essigsäure äquivalent ist.

### Aminzahl

Unter der Aminzahl (AZ) wird die Menge KOH in mg verstanden, die dem Aminanteil von 1g Substanz entspricht. Die Aminzahl wird nach DIN 16945 durch potentiometrische Titration mit 0,1 n Perchlorsäure in Essigsäure bestimmt.

### Herstellung des Polyether-Polyesters Y-OH 1, Mn 780

350 g MPEG 350 (Methoxypolyethylenglykol, Mn 350), 434 g ε-Caprolacton und 1 g DBTL (Dibutylzinndilaurat) werden bei 160 °C zur Reaktion gebracht bis ein Festkörper von > 95 % erreicht ist. Die OH-Zahl des Reaktionsproduktes beträgt 72 mg KOH/g.

Die weiteren als Y-OH verwendeten monohydroxyfunktionellen Polyester werden auf analoge Weise hergestellt.

### Allgemeine Herstellvorschrift der Monoaddukte M gemäß der allgemeinen Formel (III) (Tabelle 1):

In einem mit Rührer, Thermometer, Tropftrichter, Rückflusskühler und Stickstoffeinleitungsrohr versehenen Vierhalskolben werden 430 g Desmodur T100 (ca. 100% 2,4-Toluoldiisocyanat, NCO-Gehalt = 48,8) und 7g Benzoylchlorid vorgelegt und gut durchmischt. X g der Alkoholkomponente, die wasserfrei und bei Polyethern alkalifrei ist, werden langsam zudosiert, so dass die Temperatur 55 °C nicht übersteigt. Das Gemisch wird nach der Zudosierung weitere 3 Stunden bei 55°C gerührt. Das überschüssige TDI wird mittels Dünnschichtverdampfer bei 150 °C aus dem Reaktionsgemisch entfernt. Der Rest-TDI-Gehalt beträgt < 1 %.

**Tabelle 1: Übersicht der Monoaddukte M gemäß der allgemeinen Formel (III)**

| Monoaddukt | Alkoholkomponente Y-OH | Menge X in [g] |
|---|---|---|
| **M1** | Butanolgestarteter PO-Polyether Mn 800, OH-Zahl: 70 mg KOH/g | 800 |
| **M2** | MPEG 350, OH-Zahl: 162 mg KOH/g | 350 |
| **M3** | Butanolgestarteter EO/PO-Polyether (EO:PO 1:1) Mn 2240, OH-Zahl: 25 mg KOH/g | 2240 |
| **M4** | Polyester **Y-OH 1,** OH-Zahl: 72 mg KOH/g | 780 |
| **M5** | Hexadecanolgestarteter Monohydroxyfunktioneller ε-Caprolactonpolyester, Mn 600 | 600 |
| **M6** | Hexadecanolgestarteter Monohydroxyfunktioneller ε-Caprolactonpolyester, Mn 1200 | 1200 |
| **M7** | MPEG 500 = Methoxypolyethylenglykol, Mn 500 | 500 |
| **M8** | Butanolgestarteter EO/PO-Polyether (EO:PO 1:1) Mn 1100 | 1100 |
| **M9** | Butanolgestarteter EO/PO-Polyether (EO:PO 1:1) Mn 1300 | 1300 |
| **M10** | Butanolgestarteter EO/PO-Polyether (EO:PO 1:1) Mn 2000 | 2000 |
| **M11** | Butanolgestarteter EO/PO-Polyether (EO:PO 1:1) Mn 3100 | 3100 |
| **M12** | Butanolgestarteter EO/PO-Polyether (EO:PO 1:1) Mn 4800 | 4800 |
| **M13** | Hydroxyethylacrylatgestarteter ε-Caprolactonpolyester, Mn 1200 | 1200 |
| **M14** | Monohydroxyfunktionelles Hydroxypropyl-polydimethylsiloxan mit Butylendgruppe, Mn 1200 | 1200 |
| **M15** | Methanolgestarteter EO/PO-Polyether (EO:PO 3:1), Mn 1400 | 1400 |
| **M16** | MPEG 500-gestarteter ε-Caprolactonpolyester Mn 900 | 900 |
| **M17** | iso-Decanolgestarteter ε-Caprolactonpolyester Mn 700 | 700 |
| **M18** | iso-Decanolgestarteter ε-Caprolactonpolyester Mn 1000 | 1000 |
| **M19** | Monophenylglykolgestarteter ε-Caprolactonpolyester Mn = 1200 | 1200 |
| **M20** | n-Butanolgestarteter ε-Caprolactonpolyester, Mn = 600 | 600 |
| **M21** | n-Butanolgestarteter ε-Caprolactonpolyester, Mn = 1200 | 1200 |
| **M22** | Butanolgestarteter PO-Polyether, Mn 1100 | 1100 |
| **M23** | iso-Decanolgestarteter Polyester aus ε-Caprolacton und δ-Valerolacton im molaren Verhältnis 9:2, Mn = 1400 | 1400 |
| **M24** | ε-Caprolactonpolyester, gestartet mit einem Butanolgestarteten EO/PO-Polyether (EO:PO 1:1) Mn 1300, mittleres Molekulargewicht Mn = 2000 | 2000 |
| **M25** | MPEG 350-gestarteter ε-Caprolactonpolyester Mn 900 | 900 |
| **M26** | MPEG 350-gestarteter Polyester aus ε-Caprolacton und δ-Valerolacton im molaren Verhältnis 3:1, Mn = 950 | 950 |
| **M27** | MPEG 500-gestarteter Polyester aus ε-Caprolacton und δ-Valerolacton im molaren Verhältnis 3:1, Mn = 1100 | 1100 |
| **M28** | MPEG 750-gestarteter Polyester aus ε-Caprolacton und δ-Valerolacton im molaren Verhältnis 3:1, Mn = 1400 | 1400 |
| **M29** | MPEG 750 | 750 |
| **M30** | ε-Caprolactonpolyester Mn 1600, gestartet mit einem methanolgestarteten EO/PO-Polyether (EO:PO 3:1), Mn 1400 | 1600 |
| **M31** | Butanolgestarteter EO/PO-Polyether (EO:PO 1:1) Mn 3170 | 3170 |
| **M32** | Butanolgestarteter EO/PO-Polyether (EO:PO 1:1) Mn 2540 | 2540 |
| **M33** | Butanolgestarteter PO-Polyether, Mn 2240 | 2240 |
| **M34** | Butanolgestarteter Butylenoxid-Polyether, Mn 960 | 960 |
| **M35** | Butanolgestarteter PO-Polyether, Mn 2000 | 2000 |
| **M36** | MPEG 2000 | 2000 |
| **M37** | Isotridecylalohol | 200 |
| **M38** | n-Decanol | 158 |
| **M39** | Isodecanol | 158 |
| **M40** | Benzylalkohol | 108 |
| **M41** | Cyclohexanol | 100 |
| **M42** | Isobutanol | 74 |
| **M43** | Dipropylenglykolmonomethylether | 148 |
| **M44** | Butyltriglykol | 206 |

Die als Komponente der Formel (IV) (HX)ₚ-Z¹-(HX)_{y} eingesetzten Verbindungen sind in der folgenden Tabelle aufgeführt. Wenn keine Modifizierungskomponente **MZ** angeführt ist, werden die genannten Amine als solche eingesetzt.

### Allgemeine Vorschrift zur Umsetzung von Aminen mit Modifizierungskomponenten MZ zu Komponenten der Formel (IV) (Tabelle 2):

In einem mit Rührer, Thermometer, Tropftrichter, Rückflusskühler und Stickstoffeinleitungsrohr versehenen Vierhalskolben werden x g Amin beziehungsweise Aminmischung vorgelegt und auf 80°C erwärmt. Anschließend werden unter Rühren y g Modifizierungskomponente **MZ** so langsam zugetropft, dass die Reaktionstemperatur 90°C bei Acrylatkomponenten und 120°C bei Epoxidkomponenten nicht übersteigt. Anschließend wird noch bei dieser Temperatur bis zur vollständigen Umsetzung von **MZ** gerührt. Der Reaktionsfortschritt lässt sich über NMR-Messungen verfolgen. Gegebenenfalls kann während oder nach der Reaktion mit MPA verdünnt werden.

**Tabelle 2: Komponenten der allgemeinen Formel (IV) und Umsetzung von Aminen mit Modifizierungskomponente MZ zu Komponenten der allgemeinen Formel (IV)**

| **Komponente (IV)** | **Amin** | **Menge Amin x [g]** | **Modifizierungskomponente MZ** | **Menge MZ y [g]** |
|---|---|---|---|---|
| A1 | API | 376 | TMPTA | 296 |
| A2 | API DMAPA | 250 102 | TMPTA | 296 |
| A3 | API | 250 | DPGDA | 242 |
| A4 | API | 250 | TPGDA | 300 |
| A5 | DMAPA | 307 | TMPTA | 296 |
| A6 | DMAPA | 204 | DPGDA | 242 |
| A7 | DMAPA | 204 | TPGDA | 300 |
| A8 | EA | 122 | DPGDA | 242 |
| A9 | DEA | 210 | DPGDA | 242 |
| A10 | EA | 61 | HEA | 232 |
| A11 | DEA | 105 | HEA | 116 |
| A12 | DEA | 105 | EHA | 184 |
| A13 | DEA | 105 | PEGA-320 | 320 |
| A14 | DMAPA | 102 | HEA | 232 |
| A15 | API | 125 | DPGDA | 242 |
| | DMAPA | 102 | | |
| A16 | API | 125 | HEA | 232 |
| A17 | DMAPA | 102 | Grilonit RV 1814 | 540 |
| A18 | DMAPA | 204 | BDGE | 202 |
| A19 | DEA | 210 | BDGE | 202 |
| A20 | DMAPA | 102 | CGE | 164 |
| A21 | TEA | | | |
| A22 | MDEA | | | |
| A23 | THPEDA | | | |
| A24 | DMADPA | | | |
| A25 | BAPMA | | | |
| A26* | DMAE | | | |

| | | | | |
|---|---|---|---|---|
| *nicht erfindungsgemäß DMAPA = N,N Dimethylaminopropylamin; API = N-(3-Aminopropyl)imidazol, TEA = Triethanolamin; DEA = Diethanolamin, EA = Monoethanolamin, MDEA = N-Methyldiethanolamin, THPEDA = Tetra(2-hydroxypropyl)ethylendiamin, DMADPA = Dimethylaminopropyldiisopropanolamin, BAPMA = N,N-Bis(3-aminopropyl)methylamin, DMAE = Dimethylaminoethanol TMPTA = Trimethylolpropantriacrylat, DPGDA = Dipropylenglycoldiacrylat, TPGDA = Tripropylenglycoldiacrylat, HEA = 2-Hydroxyethylacrylat, EHA = 2-Ethylhexylacrylat, PEGA-320 = Polyethylenglykolmonoacrylat Mn 320, Grilonit RV 1814 = C₁₃/C₁₅-Alkylglycidylether, EMS-Chemie, CGE = Cresylglycidylether, BDGE = 1,4-Butandioldiglycidylether, MPA = Methoxypropylacetat (Lösemittel); | | | | |

### Allgemeine Vorschrift zur Umsetzung der Monoaddukte M der allgemeinen Formel (III) mit Komponenten der allgemeinen Formel (IV) zu urethangruppenhaltigen Reaktionsprodukten enthaltend eine oder mehrere Spezies der allgemeinen Formel (I) (Tabelle 3):

In einem mit Rührer, Thermometer, Tropftrichter, Rückflusskühler und Stickstoffeinleitungsrohr versehenen Vierhalskolben werden y g Komponente der Formel (IV) vorgelegt und unter Rühren und Stickstoffüberleitung auf 70°C erwärmt. Anschließend werden x1 g Monoaddukt **M1** langsam zudosiert, so dass die Reaktionstemperatur 80 °C nicht übersteigt. Anschließend wird die Reaktionsmischung bei 80 °C gerührt bis das Isocyanat abreagiert ist. Es kann zu Trübungen kommen, die sich im Laufe der Umsetzung auflösen. Der Fortschritt der Reaktion wird mittels titrimetrischer Bestimmung der NCO-Zahl verfolgt. Auf die gleiche Weise werden, wenn angegeben, in einer zweiten Reaktionsstufe x2 g Monoaddukt **M2** zugegeben und abreagiert. Gegebenenfalls kann während oder nach der Reaktion mit MPA verdünnt werden.
Wenn Komponente (IV) Hydroxylgruppen enthält, die mit umgesetzt werden sollen, kann die Urethanbildung durch Zugabe von 200 ppm Dibutylzinndilaurat beschleunigt werden.

**Tabelle 3: Umsetzung von Monoaddukten M mit Komponenten der Formel (IV)**

| **Beispiel** | **Monoaddukt M1** | **Menge x1 [g]** | **Monoaddukt M2** | **Menge x2 [g]** | **Komponente (IV)** | **Menge y [g]** |
|---|---|---|---|---|---|---|
| B1 | M23 | 3150 | | | A24 | 218 |
| B2 | M9 | 2948 | | | A21 | 149 |
| B3 | M9 | 4422 | | | A21 | 149 |
| B4 | M9 | 2948 | | | A22 | 119 |
| B5 | M22 | 2748 | M12 | 6174 | A1 | 672 |
| B6 | M01 | 1748 | M12 | 6174 | A1 | 672 |
| B7 | M22 | 2748 | M12 | 6174 | A2 | 649 |
| B8 | M35 | 5348 | M12 | 6174 | A1 | 672 |
| B9 | M01 | 1748 | M09 | 1474 | A1 | 672 |
| B10 | M01 | 1748 | M10 | 1774 | A1 | 672 |
| B11 | M22 | 2748 | | | A3 | 493 |
| B12 | M12 | 12348 | | | A3 | 493 |
| B13 | M12 | 12348 | | | A4 | 551 |
| B14 | M12 | 18522 | | | A1 | 676 |
| B15 | M12 | 6174 | M22 | 1374 | A4 | 551 |
| B16 | M12 | 6174 | M22 | 1374 | A3 | 493 |
| B17 | M12 | 12348 | M22 | 1374 | A1 | 672 |
| B18 | M12 | 6174 | M22 | 2748 | A1 | 672 |
| B19 | M12 | 18522 | | | A5 | 603 |
| B20 | M22 | 4122 | | | A5 | 603 |
| B21 | M22 | 2748 | | | A4 | 551 |
| B22 | M22 | 4122 | | | A1 | 672 |
| B23 | M12 | 12348 | | | A6 | 447 |
| B24 | M12 | 12348 | | | A6 | 447 |
| B25 | M12 | 6174 | M22 | 1374 | A7 | 505 |
| B26 | M12 | 12348 | | | A7 | 505 |
| B27 | M22 | 2748 | | | A6 | 447 |
| B28 | M12 | 6174 | M22 | 1374 | A6 | 447 |
| B29 | M12 | 12348 | M22 | 1374 | A5 | 603 |
| B30 | M12 | 6174 | M22 | 2748 | A5 | 603 |
| B31 | M22 | 1374 | | | A7 | 505 |
| B32 | M2 | 1050 | | | A21 | 149 |
| B33 | M3 | 2415 | M20 | 775 | A21 | 149 |
| B34 | M4 | 950 | M21 | 1375 | A21 | 149 |
| B35 | M5 | 775 | M23 | 1574 | A21 | 149 |
| B36 | M6 | 1375 | M24 | 2175 | A22 | 119 |
| B37 | M7 | 675 | M25 | 1075 | A23 | 292 |
| B38 | M8 | 2550 | M26 | 1125 | A23 | 292 |
| B39 | M11 | 3274 | M27 | 3820 | A23 | 292 |
| B40 | M13 | 1375 | M28 | 1574 | A22 | 119 |
| B41 | M14 | 1375 | M39 | 332 | A21 | 149 |
| B42 | M15 | 1575 | M29 | 924 | A24 | 218 |
| B43 | M16 | 1074 | M30 | 1775 | A25 | 145 |
| B44 | M17 | 875 | M31 | 3345 | A25 | 145 |
| B45 | M18 | 1175 | M32 | 2715 | A21 | 149 |
| B46 | M19 | 1375 | M34 | 1134 | A21 | 149 |
| B47 | M12 | 6174 | M35 | 2674 | A6 | 447 |
| B48 | M12 | 6174 | M35 | 2674 | A3 | 493 |
| B49 | M12 | 6174 | M35 | 2674 | A15 | 470 |
| B50 | M35 | 5348 | | | A3 | 493 |
| B51 | M33 | 7348 | | | A3 | 493 |
| B52 | M09 | 2948 | | | A3 | 493 |
| B53 | M12 | 6174 | M09 | 1474 | A3 | 493 |
| B54 | M09 | 1474 | M35 | 1674 | A3 | 493 |
| B55 | M12 | 6174 | M35 | 1674 | A3 | 493 |
| B56 | M36 | 4350 | | | A21 | 149 |
| B57 | M9 | 1474 | M37 | 375 | A21 | 149 |
| B58 | M9 | 1474 | M38 | 330 | A21 | 149 |
| B59 | M40 | 282 | M43 | 320 | A21 | 149 |
| B60 | M41 | 274 | M44 | 380 | A21 | 149 |
| B61 | M9 | 1474 | M42 | 250 | A21 | 149 |
| | | | | | | |
| BX1* | M9 | 1475 | | | A26 | 89 |
| BX2* | M9 | 1475 | | | A21 | 149 |
| BX3* | M9 | 1475 | | | DMAPA | 102 |

| | | | | | | |
|---|---|---|---|---|---|---|
| *: nicht erfindungsgemäße Vergleichsbeispiele | | | | | | |

### Allgemeine Vorschrift zur Quaternisierung (Tabelle 4):

In einem mit Rührer, Thermometer, Tropftrichter, Rückflusskühler und Stickstoffeinleitungsrohr versehenen Vierhalskolben wird die Ausgangsverbindung in 40 g MPA (Methoxypropylacetat) und 40 g Butylglykol sowie x g Alkylierungsreagenz 4 h bei 120 °C zur Reaktion gebracht. Der Festkörper wird mit einer 1:1-Mischung von MPA und Butylglykol auf 40% eingestellt.

**Tabelle 4: Quaternisierung**

| Beispiel | Ausgangsverbindung | Alkylierungsreagenz |
|---|---|---|
| **Q1** | 120 g B1 | 3,9 g Benzylchlorid |
| **Q2** | 335 g B58 | 12,7 g Benzylchlorid |
| **Q3** | 329 g B59 | 12,7 g Benzylchlorid |
| **Q4** | 335 g B58 | 26,2 g Grilonit 1814 |
| | | 11,4 g Benzoesäure |
| **Q5** | 329g B59 | 15,7 g CGE |
| | | 11,4 g Benzoesäure |

Grilonit RV 1814 = C₁₃/C₁₅-Alkylglycidylether, EMS-Chemie

### Allgemeine Vorschrift zur Salzbildung (Tabelle 5):

In einem mit Rührer, Thermometer, Tropftrichter, Rückflusskühler und Stickstoffeinleitungsrohr versehenen Vierhalskolben wird die zu versalzende Verbindung in 40 g MPA und 40 g Butylglycol mit x g Versalzungsreagenz 1 h bei 60 °C gerührt.

**Tabelle 5: Salzbildung**

| **Beispiel** | **Eingesetzte Verbindung** | **Versalzungsreagenz** |
|---|---|---|
| **S1** | 3100g **B2** | 146g Adipinsäure |
| **S2** | 3100g **B2** | 6,4 g Benzoesäure |
| **S3** | 3100g **B2** | 7,3 g Benzoesäure |
| **S4** | 3100g **B2** | 73g Adipinsäure |
| **S5** | 3100g **B2** | 282g Ölsäure |
| **S6** | 3100g **B2** | 200g Laurinsäure |
| **S7** | 3100g **B2** | 298g Ricinolsäure |
| **S8** | 3100g **B2** | 60g Essigsäure |

### c) Anwendungstechnische Abprüfung

Verwendung der erfindungsgemäßen Polymere als Netz- und Dispergiermittel zur Herstellung von Pigmentkonzentraten und deren Einsatz in Lacksystemen

### Ausgangsstoffe

| | |
|---|---|
| Paraloid B-66 | thermoplastisches Acrylatharz, Hersteller DOW Chemicals |
| Vinnol E 15/45 | Copolymer-Harz auf Basis Vinylchlorid und Vinylacetat, Hersteller Wacker Chemie |
| NC E 510 | Nitrocellulose, Hersteller Dow Wolff Cellulosics GmbH |
| Vialkyd AC 433 75% | Alkyd-Harz, Hersteller Allnex |
| Epikote 1001 75% | Epoxyid-Harz auf Bisphenol A-Basis, Hersteller Hexion |
| Aradur 115 X 70 | Polyamidoamin, Hersteller Huntsman |
| Joncryl 500 | Hydroxyfunktionelles Acryl-Harz, Hersteller BASF |
| Laropal A 81 | Aldehyd-Harz, Hersteller BASF |
| Cymel 303 | Amino-Crosslinker, Hersteller Allnex |
| MAK | Methylamylketon, Hersteller Eastman |
| DIDP | Diisodecylphthalat |
| Nacure 2500 | p-Toluolsulfonsäure, Hersteller King Industries |
| Dowanol PMA | Propylenglykolmethyletheracetat, Hersteller Dow Chemicals |
| Dowanol PM | Propylenglykolmethylether, Hersteller Dow Chemicals |
| Raven 5000 Ultra III | Rußpigment für hohe Jetness, Hersteller |
| Paliogen Red L3880 HD | Perylen-Rot Pigment, Hersteller |
| Hostaperm RL NF | Violett-Pigment, Hersteller |
| InkJet Margenta E02 | Pigment für InkJet-Tinten, Hersteller |
| Novoperm Yellow P-M3R | Isoindolin-Pigment, Hersteller |
| Nipex 160 IQ | Gasruß mit 20nm Primärpartikelgröße, Hersteller Degussa |
| Bayferrox Rot 130M | Eisenoxid-Rot (P.R. 101), Hersteller Lanxess |
| Heliogen Blue L7101F | Phthalocyanin-Blau (P.B. 15:4), Hersteller BASF |
| Hostaperm Rosa E | Chinacridon-Rot (P.R. 122), Hersteller Clariant |
| Colour Black FW 200 | Rußpigment (P. Bk. 7), Hersteller Orion |
| BYK 325 | Substratnetzmittel, Hersteller BYK-Chemie |
| BYK 310 | Substratnetzmittel, Hersteller BYK-Chemie |
| BYK 306 | Substratnetzmittel, Hersteller BYK-Chemie |

### Arbeitsverfahren

### Herstellung der TPA-Pigmentanreibung

Das Anreibeharz Paraloid B-66, Lösemittel, Dispergieradditiv und Pigment wurden in 100mL Glasflaschen so eingewogen, dass 50g Mahlgut erhalten wurden. Anschließend wurden 50g Glasperlen (1mm) eingewogen.

### Zusammensetzung der TPA-Pigmentkonzentrate (Angaben in g)

| | **TPA 1 (schwarz)** | **TPA 2 (rot)** | **TPA 3 (violett)** |
|---|---|---|---|
| Paraloid B-66 (50% in Xylol) | 24,0 | 24,0 | 24,0 |
| Raven Ultra 5000 III | 6,0 | | |
| Paliogen Red L 3880 HD | | 8,0 | |
| Hostaperm RL-NF | | | 5,0 |
| Dispergiermittel (100%) | 4,2 | 2,0 | 2,0 |
| n-Butanol | 5,0 | 5,0 | 5,0 |
| PMA (100%) | | 11,0 | 14,0 |
| Butylacetat (100%) | 10,8 | | |
| Gesamtpigmentgehalt (%) | 12 | 16 | 10 |
| Dispergiermittel (% s.o.p.) | 70 | 25 | 40 |

### Mahlbedingungen:

Gerät: Lau Disperser DAS 200, Dispergierzeit: 300 min, Kühlleistung Stufe 3 Verhältnis Mahlgut zu Glasperlen (1 mm Durchmesser): 1 : 1 (Gewichtsteile)

### Bewertung der Mahlgutviskosität der TPA-Anreibungen

Die Mahlgutviskosität der TPA-Anreibungen wurde ermittelt mit einem Rheological Stresstech Rheometer (Platte/Kegel, 25mm, 1°) bei 23°C.

### Mahlgutviskositäten

| | **TPA 1 (schwarz) Raven 5000 Ultra III** | | | **TPA 2 (rot) Paliogen Red L3880 HD** | | | **TPA 3 (violett) Hostaperm RL-NF** | | |
|---|---|---|---|---|---|---|---|---|---|
| | Viskosität in Pa * s | | | | | | | | |
| | 1/s | 10/s | 100/s | 1/s | 10/s | 100/s | 1/s | 10/s | 100/s |
| BX1* | 45,890 | 7,727 | 1,828 | 15,370 | 2,876 | 0,814 | 42,110 | 4,786 | 1,085 |
| BX2* | 51,610 | 7,534 | 1,774 | 22,470 | 3,808 | 1,011 | 57,960 | 7,762 | 1,432 |
| Q1 | 11,780 | 2,340 | 0,839 | 11,120 | 1,917 | 0,579 | 41,550 | 4,480 | 1,056 |
| B2 | 34,090 | 6,209 | 1,632 | 13,210 | 2,672 | 0,732 | 40,290 | 4,187 | 1,020 |
| B3 | 37,300 | 6,136 | 1,496 | 9,812 | 2,068 | 0,730 | 40,920 | 4,500 | 1,061 |
| B4 | 33,340 | 6,088 | 1,598 | 13,720 | 2,611 | 0,733 | 41,920 | 4,532 | 1,062 |

Die erfindungsgemäßen Dispergieradditive wirken stark viskositätsreduzierend im Vergleich zum Stand der Technik BX1* und BX2* bei TPA-Anreibungen von 3 verschiedenen Pigmenten, was sich schon bei niedrigen Scherraten bemerkbar macht.

### Herstellung des TPA-basierten Auflacksystems

Paraloid B-66, Lösemittel und Verlaufsadditiv wurden in einem 2,5L PE-Eimer eingewogen und mit einem Dispermat CV (Zahnscheibe 65mm) bei 2000rpm 5min homogenisiert.

### Zusammensetzung des TPA-Auflacksystems (Angaben in g)

| TPA-Klarlack | Einwaage in g |
|---|---|
| Paraloid B-66 (50% in Xylol) | 700 |
| DIDP | 20 |
| Xylol | 218 |
| PMA | 60 |
| BYK-306 | 2 |

### Herstellung der pigmentierten TPA-Auflacksysteme

In einem PE-Becher wurden das TPA-Auflacksystem und die TPA-basierte Pigmentanreibung eingewogen und mit einem Spatel vermischt. Anschließend wurden alle finalen TPA-Auflacksysteme für 10min in einem ANDALOK-Shaker homogenisiert.

### Zusammensetzung der pigmentierten TPA-Auflacksysteme (Angaben in g)

| | TPA-B1 | TPA-B2 | TPA-B3 |
|---|---|---|---|
| TPA-Auflacksystem | 28.0 | 27,0 | 26,0 |
| TPA 1 (schwarz) | 2,0 | | |
| TPA 2 (rot) | | 3,0 | |
| TPA 3 (violett) | | | 4,0 |
| Pigmentgehalt (%) | 0,8 | 1,6 | 1,3 |

### Applikation und Auswertung der pigmentierten TPA-Auflacksysteme

Die pigmentierten TPA-Auflacksysteme wurden auf PE-Folie aufgerakelt (50 µm bzw. 100 µm) und 24h bei 22°C getrocknet. Anschließend wurden der Glanzschleier und der Glanz mit einem BYK micro haze plus Instrument im Winkel von 20° gemessen. Dabei sind jeweils niedrige Werte für den Glanzschleier und hohe Werte für den Glanz als positive Ergebnisse zu bewerten. Außerdem wurde die optische Farbstärke und Transparenz der Aufzüge auf PE-Folie in der Durchsicht mit den Noten 1 (hervorragend) bis 5 (nicht akzeptabel) bewertet.

| **TPA B1 (schwarz)** Raven 5000 Ultra III | | | |
|---|---|---|---|
| **Dispergieradditiv im Mahlqut** | **Vollton** 100µm PE-Folie **Glanzschleier** | **Vollton** 100µm PE-Folie **Glanz 20°** | **Vollton** 100µm PE-Folie **Transparenz/Farbstärke** |
| BX1* | 11 | 79 | 2-3 |
| BX2* | 12 | 79 | 3 |
| B2 | 9 | 82 | 2 |
| B3 | 10 | 83 | 1-2 |
| B4 | 9 | 82 | 1 |

| **TPA B2 (rot)** Paliogen Red L3880 HD | | | |
|---|---|---|---|
| **Dispergieradditiv im Mahlgut** | **Vollton** 100µm PE-Folie **Glanzschleier** | **Vollton** 100µm PE-Folie **Glanz 20°** | **Vollton** 50µm PE-Folie **Transparenz/Farbstärke** |
| BX1* | 13 | 75 | 4 |
| BX2* | 20 | 73 | 4-5 |
| B2 | 12 | 78 | 3 |
| B3 | 12 | 78 | 3 |
| B4 | 9 | 79 | 3 |

| TPA B3 (violett) Hostaperm RL-NF | | | |
|---|---|---|---|
| **Dispergieradditiv im Mahlgut** | **Vollton** 50µm PE-Folie **Glanzschleier** | **Vollton** 50µm PE-Folie **Glanz 20°** | **Vollton** 50µm PE-Folie **Transparenz/Farbstärke** |
| BX1* | 45 | 69 | 4 |
| BX2* | 47 | 69 | 4-5 |
| Q1 | 42 | 72 | 3 |
| B2 | 41 | 72 | 3 |
| B3 | 38 | 72 | 2-3 |
| B4 | 40 | 72 | 3 |

Die erfindungsgemäßen Dispergieradditive zeigen einen geringeren Glanzschleier, bessere Glanzwerte und eine höhere Transparenz und Farbstärke im Vergleich zum Stand der Technik BX1* und BX2* für TPA-basierte Lacksysteme.

### Herstellung der Laropal A81-Pigmentanreibung

Das Anreibeharz Laropal A81 (60 Teile) wurde mit PMA (40 Teile) in einem 2,5L PE-Eimer eingewogen und mittels eines Dispermaten CV (65mm Zahnscheibe) bei 2000 rpm für 30min homogenisiert. Anschließend wurden die Lösung des Anreibeharzes, Lösemittel, Dispergieradditiv und Pigment in 100mL Glasflaschen so eingewogen, dass 50g Mahlgut erhalten wurden. Anschließend wurden 50g Glasperlen (1 mm) eingewogen.

### Zusammensetzung der Laropal-A81-Pigmentkonzentrate (Angaben in g)

| | LA 1 (schwarz) | LA 2 (rosa) | LA 3 (blau) |
|---|---|---|---|
| Laropal A 81 (60%ig in PMA) | 8,7 | 20,4 | 21,9 |
| Colour Black FW 200 | 4,0 | | |
| Hostaperm Rosa E | | 7,0 | |
| Heliogen Blau 7101 F | | | 7,5 |
| Dispergieradditiv(100%) | 2,8 | 1,8 | 1,9 |
| PMA | 34,5 | 20,8 | 18,7 |
| Gesamtpigmentgehalt (%) | 8 | 14 | 15 |
| Dispergiermittel (% s.o.p.) | 70 | 25 | 25 |

### Mahlbedingungen:

Gerät: Lau Disperser DAS 200, Mahlzeit: 300 min, Kühlleistung Stufe 3 Verhältnis Mahlgut zu Glasperlen (1 mm Durchmesser): 1 : 1 (Gewichtsteile)

### Bewertung der Mahlgutviskosität und der Laropal-A81-Anreibungen

Die Mahlgutviskosität der Laropal A81-Anreibungen wurde ermittelt mit einem Rheological Stresstech Rheometer (Platte/Kegel, 25mm, 1°) bei 23°C.

### Mahlgutviskositäten

| | **LA 1 (schwarz)** | | | **LA 2 (rosa)** | | | **LA 3 (blau)** | | |
|---|---|---|---|---|---|---|---|---|---|
| | Viskosität in mPa * s | | | Viskosität in mPa * s | | | Viskosität in mPa * s | | |
| | 1/s | 10/s | 100/s | 1/s | 10/s | 100/s | 1/s | 10/s | 100/s |
| BX3* | 64 | 23 | 16 | 34870 | 3934 | 894 | 9757 | 1017 | 274 |
| BX2* | 232 | 25 | 19 | 33660 | 3399 | 995 | 10720 | 915 | 297 |
| Q1 | 17 | 5 | 6 | 19260 | 1860 | 323 | 6991 | 791 | 141 |
| B2 | 42 | 14 | 12 | 31930 | 3179 | 682 | 9734 | 697 | 180 |
| B3 | 24 | 17 | 13 | 27900 | 3027 | 734 | 8718 | 568 | 165 |
| B4 | 44 | 16 | 12 | 28850 | 3284 | 811 | 9083 | 710 | 182 |

### Herstellung eines Einbrennlacks JC1

Bindemittel, Lösemittel und Substratnetzmittel wurden in einem 2,5L PE-Eimer eingewogen und mit einem Dispermat CV (Zahnscheibe 65mm) bei 2000rpm 5min homogenisiert.

### Zusammensetzung des Einbrennlacks JC1 (Angaben in g)

| **Einbrennlack JC1** | |
|---|---|
| Joncryl 500 | 576,0 |
| Cymel 303 | 198,0 |
| Butanol | 80,0 |
| MAK | 130,0 |
| BYK-310 | 3,0 |
| Nacure 2500 | 13,0 |

### Herstellung verschiedener Lacke auf Basis der Laropal A81-Pigmentanreibungen

In einem PE-Becher wurden die Laropal A81-basierten Pigmentanreibungen und der Einbrennlack JC1 eingewogen und per Hand mit einem Spatel vermischt. Anschließend wurden die pigmentierten Lacke für 10min in einem ANDALOK-Shaker homogenisiert.

### Zusammensetzung der pigmentierten JC1-Auflacksysteme (Angaben in g)

| | **JC1-B1 (schwarz)** | **JC1-B2 (rosa)** | **JC1-B3 (blau)** |
|---|---|---|---|
| **JC1** | 18,0 | 17,9 | 16,0 |
| **LA 1** (schwarz) | 2,0 | | |
| **LA 2** (rosa) | | 2,1 | |
| **LA 3** (blau) | | | 4,0 |
| Pigmentgehalt (%) | 0,8 | 1,5 | 3,0 |

Applikation und Auswertung der pigmentierten Einbrennlacke JC1-B1 bis JC1-B3
Die pigmentierten Einbrennlacke JC1-B1 bis JC1-B3 wurden auf PE-Folie aufgerakelt (50 µm), 15 min bei 22°C abgelüftet und 20 min bei 150°C eingebrannt. Anschließend wurden Glanzschleier und Glanz mit einem BYK micro haze plus Instrument im Winkel von 20° gemessen. Dabei sind jeweils niedrige Werte für den Glanzschleier und hohe Werte für den Glanz als positive Ergebnisse zu bewerten. Außerdem wurde die optische Transparenz und die Farbstärke der Aufzüge auf PE-Folie in der Durchsicht mit den Noten 1 (hervorragend) bis 5 (nicht akzeptabel) bewertet.

### Vergleich der schwarzen Einbrennlacke JC1-B1 (schwarz)

| **Synthese-Name** | **Glanz 20°** | **Glanzschleier** | **Transparenz/Farbstärke** |
|---|---|---|---|
| BX3* | 99 | 18 | 4-5 |
| BX2* | 101 | 21 | 3-4 |
| Q1 | 106 | 10 | 2-3 |
| B2 | 106 | 10 | 1-2 |
| B3 | 104 | 15 | 1 |
| B4 | 106 | 11 | 2-3 |

### Vergleich der rosa-farbenen Einbrennlacke JC1-B2 (rosa)

| | **Glanz 20°** | **Glanzschleier** | **Transparenz/Farbstärke** |
|---|---|---|---|
| BX3* | 109 | 33 | 4-5 |
| BX2* | 108 | 28 | 5 |
| Q1 | 116 | 14 | 3 |
| B2 | 115 | 17 | 3 |
| B3 | 115 | 19 | 3 |
| B4 | 114 | 23 | 3 |

### Vergleich der blauen Einbrennlacke JC1-B3 (blau)

| **Synthese-Name** | **Glanz 20°** | **Glanzschleier** | **Transparenz/Farbstärke** |
|---|---|---|---|
| BX3* | 110 | 35 | 4-5 |
| BX2* | 109 | 38 | 4 |
| Q1 | 116 | 24 | 3 |
| B2 | 117 | 20 | 3 |
| B3 | 116 | 20 | 2-3 |
| B4 | 116 | 23 | 3 |

Die erfindungsgemäßen Dispergieradditive zeigen einen geringeren Glanzschleier, bessere Glanzwerte und eine höhere Transparenz sowie Farbstärke im Vergleich zum Stand der Technik BX3 und BX2 für Pigmentkonzentrate auf Basis von Laropal A81 eingesetzt in einem säurekatalysierten Einbrennlack.

## Patentansprüche

1. Urethangruppenhaltiges Reaktionsprodukt, enthaltend mindestens 40 Gew.% einer oder mehrerer Spezies gemäß der allgemeinen Formel (I)
(R¹-X)ₚ-Z¹-(XH)_{y} (I),
wobei gilt p + y = w und
w für eine ganze Zahl von 2 bis 10 steht,
p für eine ganze Zahl von 2 bis 10 steht,
y für eine ganze Zahl von 0 bis 8 steht, und
X unabhängig voneinander für O, NH und/oder NZ² steht und XH unabhängig voneinander für eine Hydroxylgruppe OH, eine primäre Aminogruppe NH₂ und/oder eine sekundäre Aminogruppe NHZ² steht, wobei
Z² unabhängig voneinander für einen verzweigten oder unverzweigten, gesättigten oder ungesättigten organischen Rest G(U)ₐ steht, wobei U unabhängig voneinander für eine Hydroxylgruppe, eine primäre Aminogruppe oder eine sekundäre Aminogruppe steht und
a für eine ganze Zahl von 0 bis 8 steht,
wobei gilt w + a ≤ 10, und
die p Reste R¹ unabhängig voneinander für einen Rest der allgemeinen Formel (II)
Y-O-CO-NH-R²-NH-CO (II)
stehen,
worin die p Reste Y unabhängig voneinander für einen verzweigten oder unverzweigten, gesättigten oder ungesättigten organischen Rest mit 1 bis 1000 Kohlenstoffatomen stehen, der keine Hydroxylgruppen, keine primären Aminogruppen und keine sekundären Aminogruppen enthält,
die p Reste R² unabhängig voneinander für einen verzweigten oder unverzweigten, gesättigten oder ungesättigten organischen Rest mit 6 bis 20 Kohlenstoffatomen stehen,
Z¹ ein verzweigter oder unverzweigter, gesättigter oder ungesättigter organischer Rest ist, der mindestens eine tertiäre Stickstoffgruppe enthält und frei von XH-Gruppen ist.

2. Urethangruppenhaltiges Reaktionsprodukt nach Anspruch 1, wobei die mindestens eine tertiäre Stickstoffgruppe eine tertiäre Aminogruppe ist.

3. Urethangruppenhaltiges Reaktionsprodukt nach einem der Ansprüche 1 oder 2 enthaltend mindestens 60 Gew.-%, bevorzugt mindestens 90 Gew.-% einer oder mehrerer Spezies der allgemeinen Formel (I).

4. Urethangruppenhaltiges Reaktionsprodukt nach einem der Ansprüche 1 bis 3, wobei das zum Rest R² korrespondierende Diisocyanat R²(NCO)₂ zwei unterschiedlich reaktive Isocyanatgruppen besitzt.

5. Urethangruppenhaltiges Reaktionsprodukt nach einem der Ansprüche 1 bis 4, wobei Y mindestens einen Polyetherrest, Polyesterrest, Kohlenwasserstoffrest und/oder Polysiloxanrest enthält.

6. Verfahren zur Herstellung eines urethangruppenhaltigen Reaktionsprodukts nach einem der Ansprüche 1 bis 5, wobei
i) mindestens ein Diisocyanat R²(NCO)₂ mit mindestens einem Monoalkohol Y-OH unter Ausbildung eines Urethans der allgemeinen Formel (III)
Y-O-CO-NH-R²-NCO (III)
umgesetzt wird, wobei
R² und Y wie in Ansprüchen 1 bis 5 definiert sind, und
ii) p Urethane der allgemeinen Formel (III) werden mit mindestens einer Komponente der Formel (IV)
(HX)ₚ-Z¹-(HX)_{y} (IV)
zu einem urethangruppenhaltigen Reaktionsprodukt, enthaltend ein oder mehrere Spezies gemäß der allgemeinen Formel (I)
(R¹-X)ₚ-Z¹-(XH)_{y} (I),
umgesetzt, wobei w, y, p, R¹, X und Z¹ wie in Ansprüchen 1 bis 5 definiert sind.

7. Verfahren nach Anspruch 6, wobei in Schritt i) das Diisocyanat R²(NCO)₂ zum Monoalkohol Y-OH in einem molaren Verhältnis von mindestens 1,1:1,0 eingesetzt wird und das nicht in Schritt i) zum Urethan der allgemeinen Formel (III) umgesetzte Diisocyanat R²(NCO)₂ vor der Durchführung des Schrittes ii) aus dem Reaktionsgemisch, bevorzugt durch Destillation, entfernt wird.

8. Verfahren nach einem der Ansprüche 6 oder 7, wobei das zum Rest R² korrespondierende Diisocyanat R²(NCO)₂ zwei unterschiedlich reaktive Isocyanatgruppen besitzt.

9. Verfahren nach Anspruch 8, wobei das Diisocyanat R²(NCO)₂ ausgewählt wird aus der Gruppe bestehend aus 2,4-Toluoldiisocyanat und Isophorendiisocyanat.

10. Verfahren nach einem der Ansprüche 6 bis 9, wobei eine oder mehrere Spezies der allgemeinen Formel (IV) durch Modifikation von Aminoalkoholen, Aminen oder Polyaminen, die primäre und sekundäre Aminogruppen enthalten, mit einer Modifizierungskomponente MZ, die Epoxid- und/oder Acrylsäureestergruppen enthält, erhalten wird.

11. Netz- und Dispergiermittel enthaltend ein urethangruppenhaltiges Reaktionsprodukt gemäß einem der Ansprüche 1 bis 5 oder hergestellt nach einem Verfahren gemäß einem der Ansprüche 6 bis 10.

12. Zusammensetzung enthaltend ein urethangruppenhaltiges Reaktionsprodukt gemäß einem der Ansprüche 1 bis 5 oder hergestellt nach einem Verfahren gemäß der Ansprüche 6 bis 10.

13. Verwendung eines urethangruppenhaltigen Reaktionsprodukts gemäß einem der Ansprüche 1 bis 5 oder hergestellt nach einem Verfahren gemäß der Ansprüche 6 bis 10 als Additiv, bevorzugt als Netzmittel oder Dispergiermittel oder Dispersionsstabilisator oder Viskositätsreduzierer oder Kompatibilisator in Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

14. Urethangruppenhaltiges Reaktionsprodukt, wobei dieses eine Spezies der allgemeinen Formel (I) gemäß Anspruch 1 ist.

15. Urethangruppenhaltiges Reaktionsprodukt, enthaltend ein oder mehrere Salz/e und/oder ein oder mehrere Quaternisierungsprodukt/e der Spezies der allgemeinen Formel (I) gemäß Anspruch 1.

16. Urethangruppenhaltiges Reaktionsprodukt enthaltend ein oder mehrere Modifikationsprodukte der Spezies der allgemeinen Formel (I) nach Anspruch 1 wobei eine oder mehrere tertiäre Aminogruppen der allgemeinen Formel (I) mit Sauerstoff und/oder Peroxoverbindungen in Aminoxide überführt wurden und/oder noch vorhandene XH-Gruppen in der allgemeinen Formel (I) mit Carbonsäureanhydriden umgesetzt wurden.

## Claims

1. Reaction product containing urethane groups, containing at least 40% by weight of one or more species of the general formula (I)
(R¹-X)ₚ-Z¹-(XH)_{y} (I),
where p + y = w and
w is an integer from 2 to 10,
p is an integer from 2 to 10,
y is an integer from 0 to 8, and
X is independently O, NH and/or NZ² and XH is independently a hydroxyl group OH, a primary amino group NH₂ and/or a secondary amino group NHZ² where
Z² is independently a branched or unbranched, saturated or unsaturated organic radical G(U)ₐ where U is independently a hydroxyl group, a primary amino group or a secondary amino group and
a is an integer from 0 to 8,
where w + a ≤ 10, and
the p R¹ radicals are independently a radical of the general formula (II)
Y-O-CO-NH-R²-NH-CO (II)
in which the p Y radicals are independently a branched or unbranched, saturated or unsaturated organic radical which has 1 to 1000 carbon atoms and does not contain any hydroxyl groups, any primary amino groups or any secondary amino groups,
the p R² radicals are independently a branched or unbranched, saturated or unsaturated organic radical having 6 to 20 carbon atoms,
Z¹ is a branched or unbranched, saturated or unsaturated organic radical which contains at least one tertiary nitrogen group and is free of XH groups.

2. Reaction product containing urethane groups according to Claim 1, wherein the at least one tertiary nitrogen group is a tertiary amino group.

3. Reaction product containing urethane groups according to either of Claims 1 and 2, containing at least 60% by weight and preferably at least 90% by weight of one or more species of the general formula (I).

4. Reaction product containing urethane groups according to any of Claims 1 to 3, wherein the diisocyanate R2(NCO)2 corresponding to the R2 radical has two isocyanate groups of different reactivity.

5. Reaction product containing urethane groups according to any of Claims 1 to 4, wherein Y contains at least one polyether radical, polyester radical, hydrocarbyl radical and/or polysiloxane radical.

6. Process for preparing a reaction product containing urethane groups according to any of Claims 1 to 5, wherein
i) at least one diisocyanate R²(NCO)₂ is reacted with at least one monoalcohol Y-OH to form a urethane of the general formula (III)
Y-O-CO-NH-R²-NCO (III)
where
R² and Y are as defined in Claims 1 to 5, and
ii) p urethanes of the general formula (III) are reacted with at least one component of the formula (IV)
(HX)ₚ-Z¹-(HX)_{y} (IV)
to give a reaction product containing urethane groups, comprising one or more species of the general formula (I)
(R¹-X)ₚ-Z¹-(XH)_{y} (I)
where w, y, p, R¹, X and Z¹ are as defined in Claims 1 to 5.

7. Process according to Claim 6, wherein the diisocyanate R²(NCO)₂ is used in step i) relative to the monoalcohol Y-OH in a molar ratio of at least 1.1:1.0 and the diisocyanate R²(NCO)₂ that has not been converted to the urethane of the general formula (III) in step i) is removed from the reaction mixture, preferably by distillation, prior to the performance of step ii).

8. Process according to either of Claims 6 and 7, wherein the diisocyanate R²(NCO)₂ corresponding to the R² radical has two isocyanate groups of different reactivity.

9. Process according to Claim 8, wherein the diisocyanate R²(NCO)₂ is selected from the group consisting of toluene 2,4-diisocyanate and isophorone diisocyanate.

10. Process according to any of Claims 6 to 9, wherein one or more species of the general formula (IV) is obtained by modification of amino alcohols, amines or polyamines containing primary and secondary amino groups with a modifying component MZ containing epoxy and/or acrylic ester groups.

11. Wetting agent and dispersant comprising a reaction product containing urethane groups, according to any of Claims 1 to 5 or prepared by a process according to any of Claims 6 to 10.

12. Composition comprising a reaction product containing urethane groups, according to any of Claims 1 to 5 or prepared by a process according to Claims 6 to 10.

13. Use of a reaction product containing urethane groups according to any of Claims 1 to 5 or prepared by a process according to any of Claims 6 to 10 as an additive, preferably as a wetting agent or dispersant or dispersion stabilizer or viscosity reducer or compatibilizer in coatings, especially varnishes, plastics, pigment pastes, sealants, cosmetics, ceramics, adhesives, potting compounds, spackling compounds, printing inks and other inks.

14. Reaction product containing urethane groups which is a species of the general formula (I) according to Claim 1.

15. Reaction product containing urethane groups, comprising one or more salt(s) and/or one or more quaternization product(s) of the species of the general formula (I) according to Claim 1.

16. Reaction product containing urethane groups, comprising one or more modification products of the species of the general formula (I) according to Claim 1, wherein one or more tertiary amino groups of the general formula (I) have been converted to amine oxides with oxygen and/or peroxo compounds and/or XH groups still present in the general formula (I) have been reacted with carboxylic anhydrides.

## Revendications

1. Produit de réaction contenant des groupes uréthane, contenant au moins 40 % en poids d'une ou de plusieurs espèces selon la formule générale (I) :
(R¹-X)ₚ-Z¹-(XH)_{y} (I),
dans laquelle p + y = w et
w représente un nombre entier de 2 à 10,
p représente un nombre entier de 2 à 10,
y représente un nombre entier de 0 à 8, et
les X représentent indépendamment les uns des autres O, NH et/ou NZ² et les XH représentent indépendamment les uns des autres un groupe hydroxyle OH, un groupe amino primaire NH₂ et/ou un groupe amino secondaire NHZ², dans lequel
les Z² représentent indépendamment les uns des autres un radical G(U)ₐ organique saturé ou insaturé, ramifié ou non ramifié, dans lequel les U représentent indépendamment les uns des autres un groupe hydroxyle, un groupe amino primaire ou un groupe amino secondaire, et
a représente un nombre entier de 0 à 8,
avec w + a ≤ 10, et
les p radicaux R¹ représentent indépendamment les uns des autres un radical de la formule générale (II) :
Y-O-CO-NH-R²-NH-CO (II)
où les p radicaux Y représentent indépendamment les uns des autres un radical organique saturé ou insaturé, ramifié ou non ramifié, de 1 à 1 000 atomes de carbone, qui ne contient pas de groupes hydroxyle, pas de groupes amino primaires et pas de groupes amino secondaires,
les p radicaux R² représentent indépendamment les uns des autres un radical organique saturé ou insaturé, ramifié ou non ramifié, de 6 à 20 atomes de carbone,
Z¹ est un radical organique saturé ou insaturé, ramifié ou non ramifié, qui contient au moins un groupe azoté tertiaire et est exempt de groupes XH.

2. Produit de réaction contenant des groupes uréthane selon la revendication 1, dans lequel ledit au moins un groupe azoté tertiaire est un groupe amino tertiaire.

3. Produit de réaction contenant des groupes uréthane selon l'une quelconque des revendications 1 ou 2, contenant au moins 60 % en poids, de préférence au moins 90 % en poids, d'une ou de plusieurs espèces de la formule générale (I).

4. Produit de réaction contenant des groupes uréthane selon l'une quelconque des revendications 1 à 3, dans lequel le diisocyanate R²(NCO)₂ correspondant au radical R² comporte deux groupes isocyanate de réactivité différente.

5. Produit de réaction contenant des groupes uréthane selon l'une quelconque des revendications 1 à 4, dans lequel Y contient au moins un radical polyéther, un radical polyester, un radical hydrocarboné et/ou un radical polysiloxane.

6. Procédé de fabrication d'un produit de réaction contenant des groupes uréthane selon l'une quelconque des revendications 1 à 5, dans lequel
i) au moins un diisocyanate R²(NCO)₂ est mis en réaction avec au moins un monoalcool Y-OH avec formation d'un uréthane de la formule générale (III) :
Y-O-CO-NH-R²-NCO (III)
dans laquelle
R² et Y sont tels que définis dans les revendications 1 à 5, et
ii) p uréthanes de la formule générale (III) sont mis en réaction avec au moins un composant de la formule (IV) :
(HX)ₚ-Z¹-(HX)_{y} (IV)
pour former un produit de réaction contenant des groupes uréthanes, contenant une ou plusieurs espèces selon la formule générale (I) :
(R¹-X)ₚ-Z¹-(XH)_{y} (I),
dans laquelle w, y, p, R¹, X et Z¹ sont tels que définis dans les revendications 1 à 5.

7. Procédé selon la revendication 6, dans lequel, dans l'étape i), le diisocyanate R²(NCO)₂ est utilisé par rapport au monoalcool Y-OH en un rapport molaire d'au moins 1,1:1,0 et le diisocyanate R²(NCO)₂ non transformé dans l'étape i) en l'uréthane de la formule générale (III) est éliminé du mélange réactionnel, de préférence par distillation, avant la réalisation de l'étape ii).

8. Procédé selon l'une quelconque des revendications 6 ou 7, dans lequel le diisocyanate R²(NCO)₂ correspondant au radical R² comporte deux groupes isocyanate de réactivité différente.

9. Procédé selon la revendication 8, dans lequel le diisocyanate R²(NCO)₂ est choisi dans le groupe constitué par le diisocyanate de 2,4-toluène et le diisocyanate d'isophorène.

10. Procédé selon l'une quelconque des revendications 6 à 9, dans lequel une ou plusieurs espèces de la formule générale (IV) sont obtenues par modification d'amino-alcools, d'amines ou de polyamines, qui contiennent des groupes amino primaires et secondaires, avec un composant de modification MZ, qui contient des groupes époxyde et/ou ester de l'acide acrylique.

11. Agent mouillant et dispersant contenant un produit de réaction contenant des groupes uréthane selon l'une quelconque des revendications 1 à 5 ou fabriqué par un procédé selon l'une quelconque des revendications 6 à 10.

12. Composition contenant un produit de réaction contenant des groupes uréthane selon l'une quelconque des revendications 1 à 5 ou fabriqué par un procédé selon les revendications 6 à 10.

13. Utilisation d'un produit de réaction contenant des groupes uréthane selon l'une quelconque des revendications 1 à 5 ou fabriqué par un procédé selon les revendications 6 à 10 en tant qu'additif, de préférence en tant qu'agent mouillant ou agent dispersant ou stabilisateur de dispersion ou réducteur de viscosité ou compatibilisateur dans des revêtements, notamment des vernis, des matières plastiques, des pâtes de pigments, des agents d'étanchéité, des cosmétiques, de la céramique, des adhésifs, des masses de scellement, des enduits, des encres d'impression et des encres.

14. Produit de réaction contenant des groupes uréthane, celui-ci étant une espèce de la formule générale (I) selon la revendication 1.

15. Produit de réaction contenant des groupes uréthane, contenant un ou plusieurs sels et/ou un ou plusieurs produits de quaternisation des espèces de la formule générale (I) selon la revendication 1.

16. Produit de réaction contenant des groupes uréthane, contenant un ou plusieurs produits de modification des espèces de la formule générale (I) selon la revendication 1, dans lequel un ou plusieurs groupes amino tertiaires de la formule générale (I) ont été transformés avec de l'oxygène et/ou des composés peroxo en aminoxydes et/ou des groupes XH encore présents dans la formule générale (I) ont été mis en réaction avec des anhydrides d'acides carboxyliques.
